# EUROPÄISCHE PATENTSCHRIFT

(11) **EP 3 918 882 B1**
(45) Veröffentlichungstag und Bekanntmachung des Hinweises auf die Patenterteilung: **04.09.2024**
(21) Anmeldenummer: 20706103.7
(22) Anmeldetag: 30.01.2020
(51) Int. Cl.: H05B 47/11, H05B 47/115, H05B 47/125, H05B 47/175, G06V 20/20

(54) **VERFAHREN ZUR UNTERSTÜTZUNG DER INSTALLATION EINES SENSORS BZW. EINER LEUCHTE IN BELEUCHTUNGSSYSTEMEN**
METHOD FOR SUPPORTING THE INSTALLATION OF A SENSOR OR OF A LUMINAIRE IN LIGHTING SYSTEMS
PROCÉDÉ D'ASSISTANCE À L'INSTALLATION D'UN CAPTEUR OU D'UN APPAREIL D'ÉCLAIRAGE DANS DES SYSTÈMES D'ÉCLAIRAGE

(30) Priorität: 30.01.2019 DE 102019102252
(43) Veröffentlichungstag der Anmeldung: 08.12.2021
(73) Patentinhaber: Trilux GmbH & Co. KG, 59759 Arnsberg (DE)
(72) Erfinder: KNOCHE, Sebastian, 59757 Arnsberg (DE); WALDKIRCH, Philipp, 44143 Dortmund (DE)
(74) Vertreter: Lippert Stachow Patentanwälte Rechtsanwälte
(86) Internationale Anmeldenummer: PCT/EP2020/052331
(87) Internationale Veröffentlichungsnummer: WO 2020/157221

(56) Entgegenhaltungen:
- WO-A1-2018/065229
- WO-A1-2018/065229
- WO-A2-2012/049656
- WO-A2-2012/049656
- US-A1- 2005 002 662
- US-A1- 2005 002 662
- US-A1- 2014 125 668
- US-A1- 2014 125 668
- US-A1- 2015 077 566
- US-A1- 2015 077 566

## Beschreibung

Die Erfindung betrifft ein Verfahren zur Unterstützung der Installation eines Sensors wie eines Präsenz- und/oder Lichtsensors, bzw. einer Leuchte in Beleuchtungssystemen sowie ein System zur Durchführung eines derartigen Verfahrens.

Die heute in Beleuchtungssystemen verwendeten Präsenz- und Lichtsensoren weisen in der Regel eine räumlich komplexe Erfassungscharakteristik auf, die je nach Ausführungsform auch einstellbar gestaltet sein kann, sodass die Anordnung im Raum, die Ausrichtung im Raum und/oder Einstellung des jeweiligen Sensors innerhalb der Beleuchtungsumgebung des Beleuchtungssystems in der Regel mit einem nicht unerheblichen Zeitaufwand verbunden ist. In entsprechender Weise weisen in Beleuchtungssystemen verwendete Leuchten in der Regel einen räumlich komplexen Beleuchtungsraumbereich auf, der von der jeweiligen Leuchte ausgeleuchtet wird und der durch eine zugeordnete räumliche Lichtstärkeverteilung der Leuchte bestimmt ist. Üblicherweise erfolgt eine Angabe der räumlichen Lichtstärkeverteilung einer Leuchte über sogenannte Lichtstärkeverteilungskurven (LVK), die häufig als Polardiagramm im sogenannten C-Ebenensystem dargestellt sind. Die Angabe "Beleuchtungsumgebung" meint im Folgenden allgemein insbesondere den Raumbereich, in welchem mittels des Beleuchtungssystems eine vorgegebene Beleuchtungsaufgabe realisiert ist. Häufig werden derartige Installationsarbeiten heuristisch und aufgrund von Erfahrungswerten durchgeführt nach Versuch und Irrtum. Während Präsenzsensoren z.B. die Präsenz einer Person innerhalb der Beleuchtungsumgebung anzeigen können, dienen Lichtsensoren in der Regel dazu, vorhandene Beleuchtungsstärken zu erfassen, wobei die Ausgangssignale beider Sensoren zur Steuerung des Beleuchtungssystems verwendet werden. Je nach Beleuchtungsaufgabe können eine einzelne oder auch mehrere Leuchten mit jeweiligem Beleuchtungsraumbereich zum Einsatz kommen, um die gewünschte Beleuchtungsaufgabe vollumfänglich zu lösen.

Auf dem Gebiet bekannt sind auch Lichtplanungssysteme, mit welchen die Beleuchtungsumgebung einschließlichder verwendeten Beleuchtungseinrichtungen wie Präsenz- und/oder Lichtsensoren sowie Leuchten simuliert werden können. Derartige Systeme, insbesondere die Handhabung der Software, sind bzw. ist jedoch in der Regel Spezialisten vorbehalten und somit kostenintensiv.

Die WO 2018/065229 A1 beschreibt ein Verfahren zum Konfigurieren eines Beleuchtungssystems, das eine oder mehrere Sensoren zum Steuern einer oder mehrerer Beleuchtungseinheiten zur Beleuchtung einer Beleuchtungsumgebung aufweist. Das Verfahren umfasst die Schritte: Erhalten eines oder mehrerer Bilder des Beleuchtungsbereichs für eine gegebene Erfassungsfunktion, Identifizieren mindestens eines Zielbereichs, in dem die Erfassungsfunktion stattfinden soll, Zuordnen des Zielbereichs zu einem oder mehreren Sensorstandorten auf der Grundlage der erhaltenen Bilder die geeignet sind, den Zielbereich zu erfassen und Ausgeben des einen oder der mehreren Sensorstandorte. In einer Ausführungsform wird das oder jeder Zielbereich automatisch auf der Grundlage einer Analyse eines oder mehrerer aufgenommener Bilder identifiziert. Die Bildanalyse kann eine Gegenstandserkennung umfassen. Die US 2015/0077566 A1 betrifft ein Verfahren und eine Vorrichtung, zur Umsetzung eines Verfahrens mit den Schritten: Empfangen eines PIR-Signals und eines Videosignals von einem Passiv-Infrarot-Sensor (PIR) mit einem PIR-Detektor und einer Kamera, Anzeigen eines Videobildes von der Kamera auf einer Anzeige, Überlagern eines Bereichs des PIR-Detektors und einer Größe des PIR-Signals auf dem angezeigten Videobild, und Anzeigen eines Videobildes einer Person, die den PIR-Sensor testet, auf dem Display in Verbindung mit dem überlagerten Bereich und einer Größe des PIR-Signals, das von dem PIR-Detektor bereitgestellt wird. Die US 2005/0002662 A1 betrifft ein Verfahren und eine Vorrichtung zur Sensorplatzierung, welche die Position, die Ausrichtung, das Sichtfeld und andere Parameter eines oder mehrerer Sensoren wie z. B. Kameras, Infrarotsensoren, Ultraschallsensoren, anzeigt und interaktiv verändert. Lage, Ausrichtung, Sichtfeld und andere Parameter eines oder mehrerer Sensoren werden unter Verwendung eines vorab gespeicherten oder einer Bibliothek entnommenen 3D-Modells der Szene angezeigt und interaktiv verändert. Die WO 2012/049656 A2 betrifft ein Benutzerinteraktionssystem sowie ein Verfahren zur Steuerung eines Beleuchtungssystems. Dabei weist das Benutzerinteraktionssystem ein Display auf, ein Mittel zum Empfangen einer Ortsangabe, ein Ortidentifikationsmittel sowie einen Überlagerungsbild-Erzeuger, wobei auf der Anzeige ein Teilgebietsbild und ein Überlagerungsbild dargestellt ist und das Teilgebietsbild ein Bild eines bestimmten Teilgebietes der Beleuchtungsumgebung ist. Der Überlagerungsbild-Ersteller erzeugt das Überlagerungsbild, das Informationen umfasst, die sich auf einen Lichteffekt beziehen, der durch das Beleuchtungssystem an dem bestimmten Ort erzielt werden kann. Dabei umfasst der Überlagerungsbild-Ersteller ein Beleuchtungssystemmodell, welches die Effekte, die durch Lichtquellen des Beleuchtungssystems in der Umgebung erzeugt werden, repräsentiert. Die US 2014/0125668 A1 betrifft den Aufbau einer AR-Umgebung mittels eines Verfahrens zur Anzeige eines AR-Bildes mittels eines Anzeigegeräts. Dabei umfasst das Verfahren das Empfangen von Bilddaten, die ein Bild einer lokalen Umgebung der Anzeigevorrichtung umfassen, das Identifizieren eines physikalischen Merkmals der lokalen Umgebung mittels der Bilddaten und ferner das Erstellen eines AR-Bildes einer virtuellen Struktur zur Anzeige über dem physikalischen Merkmal in räumlicher Überlagerung mit diesem. Zur Identifizierung des physikalischen Merkmals der lokalen Umgebung aus den Bilddaten ist erläutert, eine Netzdarstellung der physikalischen Umgebung zu erzeugen, um darauf eine Netzanalyse durchzuführen, um Merkmale der Umgebung wie Wände, Decken etc. im Raum zu identifizieren.

Der vorliegenden Erfindung liegt die Aufgabe zugrunde, bei der Installation eines Sensors, insbesondere eines Präsenz- oder Lichtsensors bzw. einer Leuchte innerhalb eines Beleuchtungssystems dem Anwender eine Unterstützung bereitzustellen, mit welcher der Aufwand zur Installation solcher Sensoren bzw. Leuchten vermindert wird gegenüber der herkömmlichen Vorgehensweise.

Die vorliegende Erfindung löst diese Aufgabe verfahrensseitig schon mit einem Verfahren zur Unterstützung der Installation eines Sensors bzw. einer Leuchte für ein Beleuchtungssystem in einer Beleuchtungsumgebung mit den Merkmalen von Anspruch 1.

Je nach Ausführungsform kann dabei vorgesehen sein, dass neben dem Erfassungsbereich des Sensors bzw. dem Beleuchtungsraumbereich der Leuchte auch der Sensor bzw. die Leuchte selbst im digitalen Abbild der Beleuchtungsumgebung abgelegt werden zur Visualisierung von Ausschnitten des digitalen Abbildes der Beleuchtungsumgebung, sodass bei dieser Visualisierung auch der jeweilige Sensor bzw. die Leuchte angegeben sind.

Mit dem erfindungsgemäßen Verfahren ist es nun ohne besonderen Aufwand möglich, einen solchen Sensor bzw. eine Leuchte innerhalb eines Beleuchtungssystems unter Berücksichtigung seiner bzw. ihrer spezifischen Eigenschaften, insbesondere seiner Erfassungscharakteristik bzw. ihrer Lichtstärkeverteilung und der jeweiligen Beleuchtungsumgebung optimiert zu platzieren, auszurichten und/oder einzustellen. Das erfindungsgemäße Verfahren benötigt hierzu allein Information zum Bestimmen oder Festlegen des jeweiligen Erfassungsraumbereichs des Sensors bzw. zum Bestimmen oder Festlegen des jeweiligen Beleuchtungsraumbereichs der Leuchte, während die weiteren Verfahrensschritte ohne besonderen zeitlichen Aufwand durch die Bereitstellung entsprechender Hardware umgesetzt werden können. "Erfassungsraumbereich" bzw. "Erfassungsbereich" meint den Raumbereich, den der Sensor abfühlt, z.B. den Raumbereich, innerhalb dessen ein Präsenzsensor die Präsenz einer Person erfassen kann. Dagegen kann "Beleuchtungsraumbereich" den Raumbereich meinen, in welchem eine Leuchte zumindest eine vorgegebene Beleuchtungsstärkeschwelle erzeugt. "Einfügen des abgespeicherten Erfassungsbereiches" meint allgemein das Speichern von Information zur Festlegung des Erfassungsraumbereichs des Sensors in den Daten bzw. im Datensatz des digitalen Abbilds der Beleuchtungsumgebung. "Positions- und ausrichtungsgenaues Einfügen des Erfassungsbereiches" meint dieses Einfügen unter Berücksichtigung des erfassten Installationsortes, der Ausrichtung des Präsenz- oder Lichtsensors im Raum und/oder dessen Einstellung in das, zumindest einem vollständigen digitalen 3D-Abbild angenäherte, digitale 3D-Abbild der Beleuchtungsumgebung, d.h. das Speichern von Information zur Festlegung des in der Beleuchtungsumgebung positionierten und/oder ausgerichteten Erfassungsraumbereichs des Sensors in den Daten bzw. im Datensatz des digitalen Abbilds der Beleuchtungsumgebung, sodass der Erfassungsraumbereich z.B. an einer Anzeigeeinrichtung visualisierbar ist. Die Auslegung der Begriffe "Einfügen des Beleuchtungsraumbereichs", "positions- und aussichtsgenaues Einfügen des Beleuchtungsraumbereichs" ist entsprechend zu verstehen. Es sei ferner bemerkt, dass in der vorliegenden Anmeldung die Angabe "ein Sensor" bzw. "eine Leuchte" keine zahlenmäßige Beschränkung der Leuchte bzw. des Sensors meint, sondern stattdessen als zumindest ein Sensor bzw. zumindest eine Leuchte zu verstehen ist.

Der Schritt des Bereitstellens von Information zu einem Erfassungsraumbereich des Sensors bzw. zu einem Beleuchtungsraumbereich der Leuchte kann Information zur vollständigen Darstellung des Erfassungsraumbereichs bzw. des Beleuchtungsraumbereichs der Leuchte umfassen. Insbesondere kann diese Information dazu dienen, den vollständigen, ausgerichteten Erfassungsbereich, ausgehend vom Installationsort des jeweiligen Sensors bzw. den vollständigen, ausgerichteten Beleuchtungsraumbereich, ausgehend vom Installationsort der jeweiligen Leuchte, festzulegen.

Die Angabe "Beleuchtungsumgebungsinformation" ist breit zu verstehen und kann jedwede Information über die Ausgestaltung, insbesondere der vom Beleuchtungssystem zu beleuchtenden Beleuchtungsumgebung umfassen, beispielsweise eine jeweilige Geometrie bzw. räumliche Gestaltung der Beleuchtungsumgebung sowie Einrichtungsgegenstände wie Möbel und/oder Beleuchtungseinrichtungen des Beleuchtungssystems, wie beispielsweise Sensoren und/oder Leuchten, die innerhalb der Beleuchtungsumgebung angeordnet sind. Diese erfassten Beleuchtungsumgebungsinformationen können erfindungsgemäß zur Erzeugung und Abspeicherung eines zumindest an die reale Beleuchtungsumgebung angenäherten digitalen Abbildes der Beleuchtungsumgebung verwendet werden. Dieses, der realen Beleuchtungsumgebung zumindest angenäherte digitale Abbild kann somit die Datenmenge zur Festlegung eines virtuellen Raums aufweisen bzw. darstellen, in welchem die reale Beleuchtungsumgebung mehr oder weniger genau wiedergegeben ist, sodass das digitale Abbild für die weiteren erfindungsgemäßen Schritte bzw. Weiterbildungen der Erfindung als Grundlage herangezogen werden kann.

Der Schritt des Erfassens eines Installationsortes und/oder einer Ausrichtung des Sensors bzw. eines Installationsortes und/oder einer Ausrichtung der Leuchte kann je nach Ausführungsform beispielsweise gleichzeitig mit dem Erfassen von Beleuchtungsumgebungsinformation in einer anderen Ausführungsform auch durch Erfassen einer Eingabe eines Benutzers, oder auch über eine Datenverarbeitung, insbesondere eine Berechnung oder einen Abgleich, durchgeführt werden. Die Ausrichtung des Sensors bzw. der Leuchte kann allgemein die Orientierung des Sensors bzw. der Leuchte im Raum in Bezug auf eine ausgezeichnete Achse oder Richtung des Sensors bzw. der Leuchte meinen, beispielsweise in Bezug auf die Richtung, in welcher der Sensor die größte Erfassungsempfindlichkeit aufweist bzw. in Bezug auf die Richtung, in welcher die Leuchte die größte Lichtstärke aufweist.

Nach dem Erfassen des Installationsortes und/oder der Ausrichtung im Raum des zumindest einen Sensors bzw. der Erfassung des Installationsortes und/oder der Ausrichtung im Raum der zumindest einen Leuchte kann dessen Erfassungsraumbereich bzw. deren Beleuchtungsraumbereich in das zumindest angenäherte digitale Abbild der Beleuchtungsumgebung eingefügt werden und steht damit für nachfolgende Verfahrensschritte zur Verfügung. Beispielsweise kann bei einer vorgewählten perspektivischen Darstellung aus dem digitalen Abbild der Beleuchtungsumgebung der genaue Erfassungsbereich des Sensors einschließlich des Sensors selbst bzw. der genaue Beleuchtungsraumbereich der Leuchte bzw. die Leuchte selbst an einer Anzeigeeinrichtung visualisiert werden. Eine solche Visualisierung kann beispielsweise durch eine farbliche und/oder anderweitige Kenntlichmachung des Erfassungsbereichs bzw. des Beleuchtungsraumbereichs für die angezeigte Perspektive hervorgehoben werden.

Weitere erfindungsgemäße Merkmale sowie erfindungsgemäße Ausführungsformen sind in der allgemeinen Beschreibung, der Figurenbeschreibung sowie den Figuren angegeben.

Erfindungsgemäß weist der Schritt des Erfassens von Beleuchtungsumgebungsinformation sowie Ermitteln und Abspeichern eines zumindest angenäherten digitalen Abbilds der Beleuchtungsumgebung das Erfassen einer Mehrzahl von in unterschiedlichen Perspektiven aufgenommenen 2D-Kamerabildern der Beleuchtungsumgebung und diesen zugeordneten Signalen einer Positions- und Ausrichtungssensorik auf. Dabei können den jeweiligen Bildern Positions- und Ausrichtungsinformationen der die Bilder erfassenden Kameraeinrichtung zugeordnet sein. Über eine nachfolgende datentechnische Verarbeitung, insbesondere in Form einer Bildverarbeitung der jeweiligen Bildinformationen und zugeordneten Sensor- bzw. Leuchteninformationen, kann dann das zumindest angenäherte digitale Abbild der Beleuchtungsumgebung ermittelt werden, das für eine nachfolgende Nutzung zur Unterstützung der Installation des Sensors bzw. der Leuchte im Beleuchtungssystem gespeichert werden kann. Beispielsweise kann die jeweilige Positions- und Ausrichtungssensorik direkt in der verwendeten Kameraeinrichtung angeordnet sein, es ist jedoch auch möglich, Daten über die Perspektive der Kamera zu jedem Kamerabild über eine externe Sensorik bereitzustellen. Die Angabe "Ausrichtung der Kameraeinrichtung" kann allgemein die Orientierung der Kameraeinrichtung im Raum in Bezug auf eine ausgezeichnete Achse oder Richtung der Kameraeinrichtung meinen, beispielsweise in Bezug auf die optische Achse der Kameraeinrichtung.

Insbesondere bei einstellbaren Sensoren bzw. einstellbaren Leuchten kann zweckmäßigerweise das Erfassen zumindest eines Einstellungsparameters des Sensors bzw. der Leuchte wie eines Dreh- oder Kippwinkels und/oder eines Erfassungswinkelbereichs bzw. eines Beleuchtungswinkelbereichs vorgesehen sein. Mit dieser Information kann dann der Erfassungsraumbereich bzw. Beleuchtungsraumbereich innerhalb des digitalen angenäherten Abbilds der Beleuchtungsumgebung datentechnisch platziert bzw. in das digitale Abbild der Beleuchtungsumgebung eingefügt werden. Grundsätzlich kann dieses Erfassen zumindest eines Einstellungsparameters des Sensors bzw. der Leuchte durch das Erfassen einer Bedienereingabe, das Auslesen aus einer Datenbank oder auch durch eine datentechnische Verarbeitung von erfassten Beleuchtungsumgebungsinformationen ermittelt und damit bestimmt werden. Es sei bemerkt, dass die Angabe "Erfassungswinkelbereich" bzw. "Beleuchtungswinkelbereich" breit zu verstehen ist und nicht in jedem Fall rotationssymmetrisch in Form eines Erfassungs- bzw. Beleuchtungskegels gestaltet sein muss. Ein derartiger Einstellungsparameter des Sensors bzw. der Leuchte kann beispielsweise auch die mechanische Verstellung eines Teils, beispielsweise einer Optik des Sensors bzw. der Leuchte beinhalten bzw. beschreiben.

Zweckmäßigerweise kann bei dem erfindungsgemäßen Verfahren auch vorgesehen sein, dass der Schritt des Einfügens des Erfassungsbereichs des Sensors bzw. des Beleuchtungsraumbereichs der Leuchte in das digitale Abbild der Beleuchtungsumgebung unter Berücksichtigung zumindest eines der Einstellungsparameter des Sensors bzw. der Leuchte erfolgt, insbesondere in Abhängigkeit eines Dreh- und/oder Kippwinkels und/oder eines Erfassungswinkelbereichs bzw. eines Beleuchtungswinkelbereichs und/oder einer Einstellung einer Optik zum Verändern der Erfassungscharakteristik des Sensors bzw. der Lichtstärkeverteilung der Leuchte.

In einer Ausführungsform der Erfindung kann der Schritt des Erfassens von Beleuchtungsumgebungsinformation zur Abspeicherung eines zumindest angenäherten digitalen Abbildes der Beleuchtungsumgebung neben der Erfassung beispielsweise der Raumgeometrie bzw. räumliche Gestaltung der Beleuchtungsumgebung der sich im Raum befindlichen Gegenstände wie Mobiliar, Beleuchtungseinrichtungen wie Leuchten, Schalter, Taster, Präsenz- oder Lichtsensoren auch das Erkennen derartiger Gegenstände durch Bildverarbeitung mit Mustererkennung umfassen und unter Umständen das Laden von weiteren Informationen zu den erkannten Gegenständen innerhalb der Beleuchtungsumgebung, um ein möglichst genaues digitales Abbild der Beleuchtungsumgebung bereitzustellen und abzuspeichern, sodass dieses für nachfolgende Bearbeitungen zur Verfügung steht.

Das erfindungsgemäße Verfahren kann beispielsweise zur Bereitstellung einer sogenannten Augmented Reality Darstellung verwendet werden, bei welcher dem Betrachter zusätzlich zu einer realen Umgebung virtuelle Bestandteile perspektivisch korrekt angezeigt werden. Dies kann beispielsweise über eine Augmented Reality (AR)-Brille durchgeführt werden, wobei in das Sichtfeld der Brille lage- und ausrichtungsabhängig zur Brille der Erfassungsbereich des Präsenz- oder Lichtsensors bzw. des Beleuchtungsraumbereichs der Leuchte eingeblendet wird, sodass ein Betrachter sowohl die reale Umgebung als auch den eingeblendeten Erfassungsbereich des Sensors bzw. den eingeblendeten Beleuchtungsraumbereich in einer Gesamtszene erkennt.

In einer anderen Ausführungsform kann auch vorgesehen sein, ein 2D-Kamerabild der realen Beleuchtungsumgebung zu erstellen, auf einer Anzeigeeinrichtung wie einem Bildschirm bzw. einem Display anzuzeigen und perspektiv-genau, d.h. unter Berücksichtigung des Positionsortes und der Ausrichtung der Kameraeinrichtung den Erfassungsbereich des Präsenz- oder Lichtsensors bzw. den Beleuchtungsraumbereich aus dem digitalen Abbild der Beleuchtungsumgebung in das Bild der Anzeigeeinrichtung einzublenden und kenntlich zu machen, d.h. zu visualisieren, sodass für einen Betrachter der Anzeigeeinrichtung die angegebene Gesamtszene erkennbar ist.

Insbesondere bei solchen Ausführungsformen, bei welchen durch das erfindungsgemäße Verfahren in Bezug auf den Schritt des Erfassens von Beleuchtungsumgebungsinformation sowie des Ermittelns eines zumindest angenäherten digitalen Abbilds der Beleuchtungsumgebung ein möglichst genaues digitales Abbild der Beleuchtungsumgebung erzeugt wird, kann zweckmäßigerweise das Erfassen eines Soll-Erfassungsbereichs des Sensors mittels eines Eingabemittels durchgeführt werden, insbesondere an einer als berührungsempfindlicher Bildschirm ausgebildeten Anzeigeeinrichtung, der allgemein als Touchscreen bezeichnet wird. Bedienereingaben zum Soll-Erfassungsbereich des Sensors können damit auf einfache Weise vom Nutzer eingegeben und von einem erfindungsgemäßen System erfasst werden, wobei der Nutzer beispielsweise lage- und ausrichtungsgenau den notwendigen Soll-Erfassungsbereich auf dem Schirm festlegen bzw. markieren kann, der dann erfasst und beispielsweise auch im digitalen Abbild der Beleuchtungsumgebung eingefügt werden kann, sodass er für weitergehende Bearbeitungen, insbesondere zur Ermittlung eines passenden Sensors und/oder notwendiger Einstellungen bzw. Positionierung und/oder Ausrichtung des jeweiligen Sensors zur Verfügung steht.

In einer weiteren Ausführungsform kann zweckmäßigerweise das Erfassen eines Soll-Beleuchtungsraumbereichs der Leuchte mittels eines Eingabemittels durchgeführt werden, insbesondre an einer als berührungsempfindlicher Bildschirm ausgebildeten Anzeigeeinrichtung. Bedienereingaben zum Soll-Beleuchtungsraumbereich der Leuchte können damit auf einfache Weise eingegeben und von dem erfindungsgemäßen System erfasst werden, wobei der Nutzer beispielsweise lage- und ausrichtungsgenau den notwendigen Soll-Beleuchtungsraumbereich auf dem Schirm festlegen bzw. markieren kann, der dann rechnergestützt erfasst und beispielsweise auch im digitalen Abbild der Beleuchtungsumgebung eingefügt werden kann, sodass er für weitergehende Bearbeitung, insbesondere zur Ermittlung einer passenden Leuchte und/oder notwendige Einstellungen bzw. Positionierung und/oder Ausrichtung der jeweiligen Leuchte zur Verfügung steht.

In einer anderen Ausführungsform des erfindungsgemäßen Verfahrens kann vorgesehen sein, zur Unterstützung der Installation eines Sensors bzw. einer Leuchte in Beleuchtungssystemen nicht auf der Basis einer erweiterten Realität, sondern auf der Grundlage einer rein virtuellen Realität, d.h. auf der Grundlage des erstellten, angenäherten digitalen Abbildes der Beleuchtungsumgebung die weitergehenden Schritte, insbesondere ein Erfassen eines Soll-Erfassungsbereichs des Sensors bzw. ein Erfassen eines Soll-Beleuchtungsbereichs der Leuchte durchzuführen. Diese Ausführungsformen eignen sich insbesondere in solchen Fällen, bei welchen das angenäherte digitale Abbild der Beleuchtungsumgebung in Bezug auf die Genauigkeit bzw. Detailtreue vergleichsweise nah an der realen Vorlage liegt. Insbesondere in solchen Fällen kann auf die Aufnahme eines 2D-Kamerabildes der realen Beleuchtungsumgebung verzichtet werden und nachfolgende Verfahrensschritte allein auf der Grundlage des erzeugten digitalen Abbilds der Beleuchtungsumgebung durchgeführt werden. Beispielsweise kann dabei eine Ansicht aus dem digitalen Abbild der Beleuchtungsumgebung durch Vorgabe eines Standortes und einer Sichtausrichtung in einer Anzeigeeinrichtung wie einem Bildschirm oder einer Virtual Reality (VR) -Brille angezeigt werden. In ähnlicher Weise wie in der erstbeschriebenen Ausführungsform kann das Erfassen eines Soll-Erfassungsbereichs des Sensors bzw. das Erfassen eines Soll-Beleuchtungsraumbereichs der Leuchte durchgeführt werden, insbesondere unter Anwendung eines Eingabemittels durch den Nutzer. Dies kann beispielsweise dadurch durchgeführt werden, dass die Anzeigeeinrichtung als Touchscreen ausgebildet ist und vom Nutzer mit Bezug auf die dargestellte Ansicht auf der Anzeigeeinrichtung ein Soll-Erfassungsbereich des Sensors bzw. ein Soll-Beleuchtungsraumbereich der Leuchte markiert bzw. ausgewählt wird. Der so identifizierte Soll-Erfassungsbereich bzw. Soll-Beleuchtungsraumbereich kann dann in das digitale Abbild des Beleuchtungsraums eingefügt und entsprechend für spätere Visualisierungen des Soll-Erfassungsbereichs bzw. des Soll-Beleuchtungsraumbereichs im digitalen Abbild der Beleuchtungsumgebung markiert werden. Diese datentechnische Kenntlichmachung im digitalen Abbild hat dann zur Folge, dass bei der Darstellung eines beliebigen Ausschnittes aus dem digitalen Abbild der Soll-Erfassungsbereich des Sensors bzw. der Soll-Beleuchtungsraumbereich der Leuchte soweit visualisiert bzw. erkennbar ist, wie er im jeweiligen Ausschnitt vorliegt.

Zur weiteren Erleichterung der Installation eines derartigen Sensors in Beleuchtungssystemen kann zweckmäßigerweise vorgesehen sein, dass auf der Grundlage des gespeicherten digitalen Abbildes der Beleuchtungsumgebung und des jeweiligen Erfassungsraumbereichs des Sensors mittels Datenverarbeitung Positionierungs- bzw. Anordnungsinformation für den Sensor, beispielsweise Positionskoordinaten, Ausrichtungs- und/oder Einstellungsparameter des Sensors ermittelt werden zum Positionieren und/oder Ausrichten bzw. Einstellen des Sensors. Diese Ermittlung, insbesondere Berechnung, kann derartig erfolgen, dass bei der entsprechenden Anordnung des realen Sensors, insbesondere Positionierung, Ausrichten und/oder Einstellen, der Soll-Erfassungsbereich durch den Erfassungsraumbereich des Sensors zumindest im Wesentlichen abgedeckt ist.

Für die Installation einer Leuchte in Beleuchtungssystemen kann entsprechend vorgegangen werden, d.h. zur weiteren Erleichterung der Installation kann zweckmäßigerweise vorgesehen sein, dass auf der Grundlage des gespeicherten digitalen Abbildes der Beleuchtungsumgebung und des jeweiligen Beleuchtungsraumbereichs der Leuchte mittels Datenverarbeitung Positionierungs- bzw. Anordnungsinformation für den Sensor, beispielsweise Positionskoordinaten, Ausrichtungs- und/oder Einstellungsparameter der Leuchte ermittelt werden zum Positionieren und/oder Ausrichten bzw. Einstellen der Leuchte. Diese Ermittlung, insbesondere Berechnung, kann derartig erfolgen, dass bei der entsprechenden Anordnung der Leuchte, insbesondere Positionierung, Ausrichten und/oder Einstellen, der Soll-Beleuchtungsraumbereich durch den Beleuchtungsraumbereich der Leuchte zumindest im Wesentlichen abgedeckt ist.

Zweckmäßigerweise kann vorgesehen sein, dass wie beschrieben, rechnergestützt ermittelte Positionierungs-, Ausrichtungs- und/oder Einstellungsinformation für den Sensor bzw. die Leuchte an einer Ausgabeeinrichtung ausgegeben werden, beispielsweise an einem Monitor zur Visualisierung für einen Anwender und/oder über eine digitale Schnittstelle zur Übermittlung dieser Information an eine Steuereinrichtung bzw. direkt zum Sensor bzw. zur Leuchte zur Einstellung der ermittelten Positionierung, Ausrichtung und/oder Einstellung.

In einer weiteren Ausführungsform kann vorgesehen sein, dass für eine Mehrzahl von Präsenz- oder Lichtsensoren zugeordnete Informationen zu Erfassungsraumbereichen gespeichert werden und in Abhängigkeit eines erfassten Soll-Erfassungsbereichs, einer aus der Mehrzahl der Sensoren, dessen Installationsort, dessen Ausrichtung und/oder dessen Einstellung ermittelt wird, mit welchem bzw. mit welcher der Soll-Erfassungsbereich am besten bzw. optimal bereitgestellt werden kann, sodass mit dem erfindungsgemäßen Verfahren die optimalen Installationsdaten wie Installationsort, Ausrichtung und/oder Einstellung sowie der Sensor selbst rechnergestützt ausgewählt werden kann bzw. können. In ähnlicher Weise, wie vorstehend für den Sensor beschrieben, kann vorgesehen sein, dass für eine Mehrzahl von Leuchten zugeordnete Informationen zu Beleuchtungsraumbereichen gespeichert werden und in Abhängigkeit eines erfassten Soll-Beleuchtungsraumbereichs eine aus der Mehrzahl der Leuchten, deren Installationsort, deren Ausrichtung und/oder deren Einstellung ermittelt wird, mit welchem bzw. mit welcher der Soll-Beleuchtungsraumbereich am besten bzw. optimal bereitgestellt werden kann, sodass mit dem erfindungsgemäßen Verfahren die optimalen Installationsdaten wie Installationsort, Ausrichtung und/oder Einstellung sowie die Leuchte selbst rechnergestützt ausgewählt werden kann bzw. können. Vorrichtungsseitig wird die obige Aufgabe gelöst durch ein System zur Unterstützung der Installation eines Präsenz- oder Lichtsensors bzw. einer Leuchte für ein Beleuchtungssystem in einer Beleuchtungsumgebung mit den Merkmalen von Anspruch 8. Mit der angegebenen Gestaltung des erfindungsgemäßen Systems ist dieses ausgebildet, das obenstehend beschriebene erfindungsgemäße Verfahren zur Unterstützung der Installation eines Präsenz- oder Lichtsensors bzw. einer Leuchte für ein Beleuchtungssystem in einer Beleuchtungsumgebung auszuführen.

Vorzugsweise kann auch vorgesehen sein, dass die Datenverarbeitungseinrichtung bzw. die in ihr ablaufenden bildverarbeitenden Programme ausgebildet sind zur Erfassung, insbesondere auch zum Erkennen von auf den jeweiligen Bildern dargestellten Gegenständen wie beispielsweise Möbel, Beleuchtungseinrichtungen, wie die zumindest eine Leuchte und/oder ihre Ausrichtung im Raum, Schalter und insbesondere auch den zumindest einen Präsenz- oder Lichtsensor und /oder seiner Ausrichtung im Raum. Zweckmäßigerweise kann die Datenverarbeitungseinrichtung komplexe Bildverarbeitungssoftware ausführen, um mittels einer Bewertung der erfassten 2D-Kamerabildern die räumliche Beleuchtungsumgebung zu erfassen und ein zumindest angenähertes digitales Abbild dieser Beleuchtungsumgebung bereitzustellen. Derartige Software ist auf dem Gebiet wohlbekannt, beispielhaft seien die Systeme ARKit^{®} bzw. ARCore^{®} der Firma Apple^{®} bzw. Google^{®} genannt, sodass auf Details nicht weiter eingegangen werden muss.

Um auch Anwendereingaben zu ermöglichen, insbesondere zur manuellen Eingabe zumindest eines Einstellungsparameters des Sensors, insbesondere eines Drehwinkels und/oder eines Erfassungswinkelbereichs bzw. zur manuellen Eingabe zumindest eines Einstellungsparameters der Leuchte, insbesondere eines Drehwinkels und/oder eines Beleuchtungswinkelbereichs, kann das erfindungsgemäße System eine mit der Steuereinrichtung verbundene Eingabeeinrichtung aufweisen, sodass die Steuereinrichtung die über die Eingabeeinrichtung eingegebenen Informationen erfassen und zur weiteren Verarbeitung bereitstellen kann.

In einer weiteren Ausführungsform kann auch vorgesehen sein, dass derartige Einstellungsparameter über einen Zugriff auf eine Datenbank oder bei der Erfassung und Verarbeitung von Beleuchtungsumgebungsinformation erfasst werden können. Eine solche Eingabeeinrichtung kann beispielsweise in Form einer Tastatur oder eines Touchscreens ausgebildet sein.

Um innerhalb des angenäherten digitalen Abbildes der Beleuchtungsumgebung den jeweiligen Erfassungsbereich des Sensors bzw. den jeweiligen Beleuchtungsraumbereich der Leuchte möglichst genau anzugeben, kann zweckmäßigerweise vorgesehen sein, dass das Einfügemittel auch ausgebildet ist, diesen Erfassungsbereich bzw. diesen Beleuchtungsraumbereich in das angenäherte digitale Abbild der Beleuchtungsumgebung unter Berücksichtigung zumindest eines der Einstellungsparameter des Sensors bzw. der Leuchte einzufügen, insbesondere unter Berücksichtigung eines Drehwinkels und/oder eines Erfassungswinkelbereichs des Sensors bzw. eines Beleuchtungsraumwinkelbereichs der Leuchte.

Eine besonders einfache Umsetzbarkeit des erfindungsgemäßen Verfahrens wird mit einem System bereitgestellt, umfassend ein Datenendgerät wie ein Tablet oder ein Smartphone, das zumindest die obenstehend angegebenen Einrichtungen wie die Steuereinrichtung, das Positionserfassungsmittel zum Erfassen eines Installationsortes und/oder der Ausrichtung des Sensors bzw. der Leuchte, das Einfügemittel, die Kameraeinrichtung sowie die der Kameraeinrichtung zugeordneten Positions- und Ausrichtungserfassungseinrichtung, die Datenverarbeitungseinrichtung und die Eingabeeinrichtung sowie eine Anzeigeeinrichtung aufweist. Wie der Fachmann erkennt, kann ein herkömmliches Tablet oder ein Smartphone die angegebenen notwendigen Einrichtungen bereitstellen. Im Falle einer erweiterten Darstellung kann das Datenendgerät insofern ausgebildet sein zur Erfassung zumindest eines 2D-Bildes der Beleuchtungsumgebung zum Anzeigen des von der Kameraeinrichtung aufgenommenen zumindest einen Bildes an der Anzeigeeinrichtung wie einem Display und zum Einblenden des Erfassungsbereichs des Sensors bzw. den Beleuchtungsraumbereich der Leuchte aus dem digitalen Abbild der Beleuchtungsumgebung in das Bild an der Anzeigeeinrichtung unter Berücksichtigung des Positionsortes und/oder Ausrichtung der Kameraeinrichtung. Durch die beschriebene Gestaltung kann ein Nutzer mit dem wie dargestellt gestalteten Datenendgerät den Erfassungsbereich des Sensors bzw. den Beleuchtungsraumbereich der Leuchte in Echtzeit kontrollieren oder erfassen, wobei er nicht auf eine einzelne Perspektive beschränkt ist. Stattdessen kann mit der Änderung des Positionsortes und der Ausrichtung der Kameraeinrichtung der gesamte Erfassungsbereich des Sensors bzw. der gesamte Beleuchtungsraumbereich der Leuchte abgetastet bzw. auf der Anzeigeeinrichtung dargestellt und damit dem Nutzer visualisiert werden.

In einer besonders zweckmäßigen Ausführungsform kann vorgesehen sein, dass das Datenendgerät zur Erfassung einer Bedienereingabe eines Soll-Erfassungsbereichs des Sensors bzw. eines Soll-Beleuchtungsraumbereichs der Leuchte ausgebildet ist, insbesondere mittels eines von einem Anwender bedienbaren Eingabemittels wie eines Touchscreens, wobei beispielsweise an einem am Touchscreen angezeigten zumindest einen Bildes vom Nutzer der in der angezeigten Perspektive wirksame Soll-Erfassungsbereich bzw. Soll-Beleuchtungsraumbereich markiert und damit vom Datenendgerät erfasst werden kann.

Bei der beschriebenen Eingabe ist es grundsätzlich möglich, dass der Nutzer eine Vielzahl von Perspektiven durch jeweiliges Ausrichten des Datenendgeräts wählt und zu jeder Perspektive den jeweiligen Soll-Erfassungsbereichsabschnitt bzw. den jeweiligen Soll-Beleuchtungsraumbereichsabschnitt eingibt, sodass auf diese Weise vom Nutzer ein dreidimensionaler Soll-Erfassungsbereich des jeweiligen Sensors bzw. ein dreidimensionaler Soll-Beleuchtungsraumbereich der jeweiligen Leuchte eingegeben und damit erfasst sowie in das angenäherte digitale Abbild des Beleuchtungsraumes eingefügt werden kann und für weitere Verarbeitungsschritte zur Verfügung steht.

In einer anderen Ausführungsform kann auch vorgesehen sein, dass das Datenendgerät ausgebildet ist zur Darstellung zumindest einer Ansicht aus dem angenäherten digitalen Abbild der Beleuchtungsumgebung an der Anzeigeeinrichtung und zum Erfassen eines Soll-Erfassungsbereichs des Sensors bzw. eines Soll-Beleuchtungsraumbereichs der Leuchte, wie es obenstehend für die vorhergehende Ausführungsform beschrieben ist. Der einzige Unterschied besteht darin, dass in dieser Ausführungsform keine reale Kameraaufnahme der Beleuchtungsumgebung für die Eingabe des Soll-Erfassungsbereichs bzw. des Soll-Beleuchtungsraumbereichs herangezogen wird, sondern direkt eine Ansicht aus dem digitalen Abbild der Beleuchtungsumgebung, sodass der Aufwand bei der Erfassung des Soll-Erfassungsbereichs des Sensors bzw. des Soll-Beleuchtungsraumbereichs gegenüber der erstbeschriebenen Anwendung vermindert und die Flexibilität erhöht ist.

In einer Ausführungsform, bei welcher das Erfassen eines Installationsortes und/oder einer Ausrichtung des Sensors bzw. der Leuchte beispielsweise durch Berechnen oder Abgleich des bekannten Erfassungsraumbereichs des Sensors bzw. des Beleuchtungsraumbereichs der Leuchte mit dem Soll-Erfassungsbereich bzw. dem Soll-Beleuchtungsraumbereich durchgeführt wird, kann zweckmäßigerweise vorgesehen sein, dass derartige Positionierungsinformation wie Positionskoordinaten, Ausrichtung und/oder Einstellungsparameter mittels einer Ausgabeeinrichtung wie einer digitalen Schnittstelle, über welche die Daten beispielsweise an eine Steuereinrichtung übermittelbar sind oder eine Anzeigeeinrichtung, an welcher die Daten visualisierbar sind, ausgebbar sind. In einer besonderen Ausführungsform kann auch vorgesehen sein, über eine derartige Schnittstelle des Datenendgerätes die ermittelten Daten, beispielsweise Informationen zu Ausrichtung und/oder Einstellung des Sensors bzw. der Leuchte an eine externe Steuereinrichtung, insbesondere eine Steuereinrichtung des Sensors bzw. der Leuchte zu übermitteln, an welchem diese durch Ansteuern entsprechender Aktuatoren einstellbar sind.

Zur weiteren Erleichterung der Installation eines Präsenz- oder Lichtsensors in einem Beleuchtungssystem kann auch vorgesehen sein, dass das Datenendgerät ausgebildet ist, auf einen Speicher zuzugreifen, auf welchem eine Mehrzahl von jeweils einem Präsenz- oder Lichtsensor zugeordneten Erfassungsraumbereichen gespeichert sind, sodass das System in der Lage ist, in Abhängigkeit eines Soll-Erfassungsbereichs einen solchen Sensor auszuwählen, welcher in Bezug auf seinen Erfassungsraumbereich den Soll-Erfassungsbereich in Bezug auf vorgegebene Kriterien am nächsten kommt. Zur weiteren Erleichterung der Installation einer Leuchte in einem Beleuchtungssystem kann vorgesehen sein, dass das Datenendgerät ausgebildet ist, auf einen Speicher zurückzugreifen, auf welchem eine Mehrzahl von, jeweils einer Leuchte zugeordneten Beleuchtungsraumbereichen gespeichert sind, sodass das System in der Lage ist in Abhängigkeit eines Soll-Beleuchtungsraumbereichs eine solche Leuchte auszuwählen, welche in Bezug auf ihren Beleuchtungsraumbereich diesem Soll-Beleuchtungsraumbereich in Bezug auf vorgegebene Kriterien am nächsten kommt.

Es sei bemerkt, dass das vorstehend beschriebene Verfahren bzw. die vorstehend beschriebene Vorrichtung in einer Ausführungsform sowohl zur Unterstützung der Installation eines Sensors als auch zur Unterstützung der Installation einer Leuchte ausgebildet sein kann, sodass in diesem Fall die Installation zumindest eines Sensors als auch die Installation zumindest einer Leuchte gleichzeitig unterstützt wird.

Die Erfindung wird im Folgenden durch das Beschreiben einiger Ausführungsformen unter Bezugnahme auf die beiliegenden Figuren erläutert, wobei
- Figur 1: in einer Seitenansicht eine typische Beleuchtungsumgebung eines Beleuchtungssystems,
- Figur 2: in einem Ablaufdiagramm das erfindungsgemäße Verfahren zur Unterstützung der Installation eines Sensors,
- Figur 3: in einer Prinzipdarstellung ein Datenendgerät zur Ausführung der des erfindungsgemäßen Verfahrens,
- Figur 4: die beispielhafte Nutzung des erfindungsgemäßen Verfahrens in einem Ablaufdiagramm, und
- Figur 5: ein weiteres Beispiel der Nutzung des erfindungsgemäßen Verfahrens in einem weiteren Ablaufdiagramm,
zeigt.

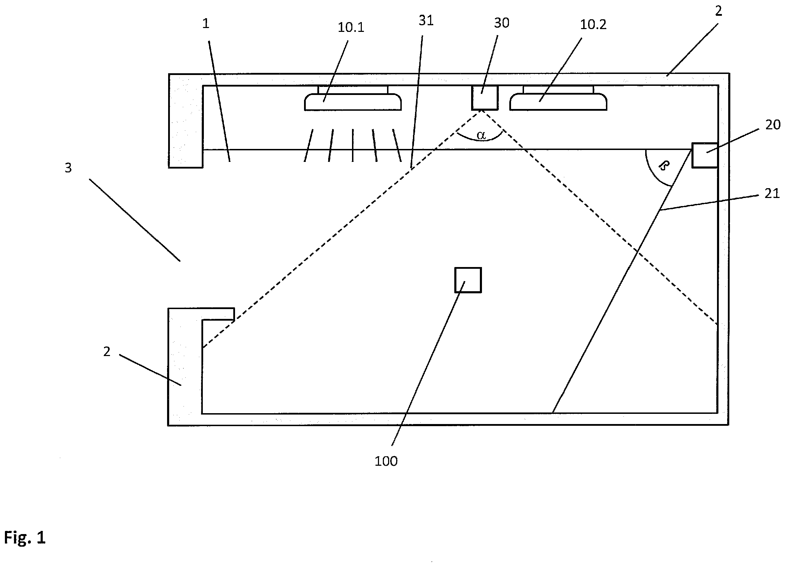

Figur 1 zeigt eine Seitenansicht eines Raums, der die Beleuchtungsumgebung eines im Raum installierten Beleuchtungssystems darstellt. Dieses umfasst in der beschriebenen Ausführungsform mehrere Leuchten, Betätigungselemente wie Schalter und Taster, einen Lichtsensor sowie einen Präsenzsensor, wobei die einzelnen Elemente des Beleuchtungssystems in der Regel steuerungstechnisch mit einer Steuereinrichtung verbunden sind. In der in Figur 1 angegebenen Ansicht sind die beiden Leuchten 10.1, 10.2, ein Lichtsensor 20 zur Erfassung der Beleuchtungsstärke mit einem vorgegebenen Erfassungskegel 21 und in der angegebenen Perspektive mit einem Erfassungswinkel β sowie einem Präsenzsensor 30 dargestellt, welcher die Präsenz einer Person im Raum erfasst, wobei in der Darstellung der Erfassungskegel 31 mit einem diesbezüglichen Erfassungswinkel α dargestellt ist. Je nach Ausführungsform kann der Erfassungskegel des jeweiligen Sensors sehr komplex ausgebildet und stark richtungsabhängig sein. Jeder dieser Sensoren weist einen diesbezüglichen Erfassungsraumbereich auf, der auf der Grundlage seiner Erfassungscharakteristik ermittelt werden kann. Der jeweilige Erfassungsraumbereich beschreibt, ausgehend von einer definierten Ausrichtung des Sensors, die Raumbereiche, in welchen eine Erfassung vom Sensor realisiert wird. Je nach Ausführungsform ist der Erfassungsraumbereich nicht rotationssymmetrisch um eine Symmetrieachse, sondern kann je nach Ausgestaltung des jeweiligen Sensors einen komplexen Teilraum innerhalb der Beleuchtungsumgebung darstellen.

Zur Durchführung des erfindungsgemäßen Verfahrens wird in der beschriebenen Ausführungsform ein in der Abbildung der Figur 1 auch angegebenes Datenendgerät in Form eines Smartphones 100 verwendet.

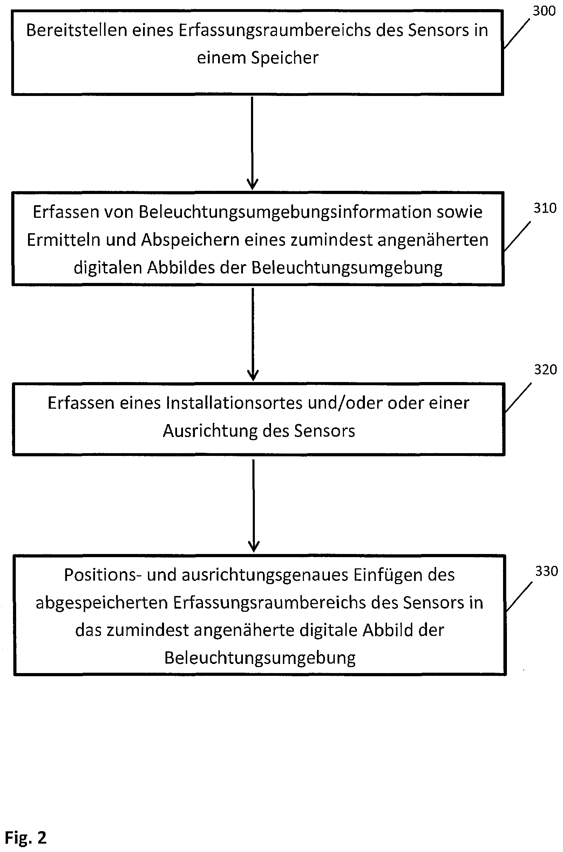

Bei der Durchführung des erfindungsgemäßen Verfahrens zur Unterstützung der Installation eines Präsenz- oder Lichtsensors für ein Beleuchtungssystem in einer Beleuchtungsumgebung, siehe das entsprechende Ablaufdiagramm der Fig. 2, erfolgt eine Bereitstellung (Schritt 300) durch das Abspeichern des jeweiligen Erfassungsraumbereichs der beiden Sensoren 20, 30 in einem Speicher, wobei der jeweilige Erfassungsraumbereich sich auf eine vorgegebene Ausrichtung des jeweiligen Sensors bezieht, sodass der jeweilige Erfassungsraumbereich innerhalb der Beleuchtungsumgebung sowohl in Bezug auf den Installationsort des Sensors als auch in Bezug auf dessen Ausrichtung eingestellt wird.

In einem weiteren Schritt, siehe Figur 2, wird Beleuchtungsumgebungsinformation erfasst und daraus ein zumindest angenähertes digitales Abbild der Beleuchtungsumgebung, hier des Raums 1 ermittelt und in einem Speicher abgelegt, (Schritt 310). "Digitales Abbild der Beleuchtungsumgebung" meint dabei die Ermittlung einer Datenmenge oder Datensatzes, die bzw. der es erlaubt, eine dreidimensionale Darstellung der Beleuchtungsumgebung, hier des Raumes 1 bereitzustellen, derartig, dass mit dem abgespeicherten Datensatz eine Mehrzahl von insbesondere beliebige Perspektivansichten innerhalb des Raumes bzw. der Beleuchtungsumgebung erzeugt werden kann. Insofern kann dieses digitale Abbild Informationen über die durch Begrenzungsflächen festgelegte Geometrie des Raumes, installierte Beleuchtungselemente wie Leuchten, Sensoren, Betätigungselemente etc., jedoch auch Informationen über im Raum befindliche Gegenstände wie Möbel umfassen, sodass das digitale Abbild der Beleuchtungsumgebung quasi als "digitaler Zwilling" des realen Raums (Beleuchtungsumgebung) angesehen werden kann. Zur Erfassung der realen Beleuchtungsumgebungsinformation wird in der beschriebenen Ausführungsform das Smartphone 100 verwendet, mit welchem eine Mehrzahl von in unterschiedlichen Perspektiven aufgenommenen 2D-Kamerabildern der Beleuchtungsumgebung erfasst werden zusammen mit zugeordneten Signalen einer der Kameraeinrichtung zugeordneten Positions- und Ausrichtungserfassungseinrichtung, sodass zu jedem Bild die notwendige Information bezüglich der Perspektive, d.h. dem Aufnahmeort und der Ausrichtung der Kamera mit abgespeichert werden. Das hier verwendete Smartphone kann zu diesem Zweck neben der Kamera ein Gyroskop sowie einen Beschleunigungssensor aufweisen, mit welchen die Lage und Ausrichtung des Smartphones für jede Bildaufnahme ermittelt werden kann.

Auf der Basis einer mustererkennenden Bildverarbeitung kann in der beschriebenen Ausführungsform aus den erfassten Bildern und den zugeordneten Signalinformationen der Positions- und Ausrichtungserfassungseinrichtung des Smartphones ein zumindest angenähertes digitales Abbild der Beleuchtungsumgebung erstellt und in einem Speicher, insbesondere dem Speicher des Smartphones abgelegt werden (Schritt 310). Als nächster Schritt erfolgt die Erfassung eines Installationsortes und/oder einer Ausrichtung des Sensors (Schritt 320) in der beschriebenen Ausführungsform der beiden Sensoren 20, 30. Je nach Umsetzung der Erfindung kann beispielsweise der Installationsort und die Ausrichtung des Sensors im Rahmen der vorgenannten Bildverarbeitung ermittelt bzw. erfasst werden. In einer anderen Ausführungsform kann diese Erfassung auch durch Erfassen einer Bedienereingabe an einer Eingabevorrichtung oder durch Abruf dieser Information aus einer Speichereinrichtung erfolgen.

In einer weiteren Ausführungsform kann auch vorgesehen sein, diese Erfassung des Installationsortes und/oder der Ausrichtung des Sensors im Rahmen eines Optimierungsverfahrens durchzuführen, beispielsweise derart, dass ein Bediener an einer berührungsempfindlichen Anzeige einen Soll-Erfassungsraumbereich des Sensors eingibt und im Verfahren rechnergestützt auf der Grundlage des abgelegten Erfassungsraumbereichs für den Sensor den jeweiligen Installationsort und/oder die Ausrichtung des Sensors ermittelt, um den gewünschten Soll-Erfassungsraumbereich abzudecken.

Erfindungsgemäß wird in dem weiteren Schritt 330 des Verfahrens der bereitgestellte Erfassungsraumbereich entsprechend des erfassten Installationsortes und/oder der Ausrichtung des Sensors positions- und ausrichtungsgenau in das zumindest angenäherte digitale Abbild der Beleuchtungsumgebung eingefügt und steht damit beispielsweise zur Visualisierung und Kontrolle eines Erfassungsraumbereichs eines installierten Präsenz- oder Lichtsensors zur Verfügung.

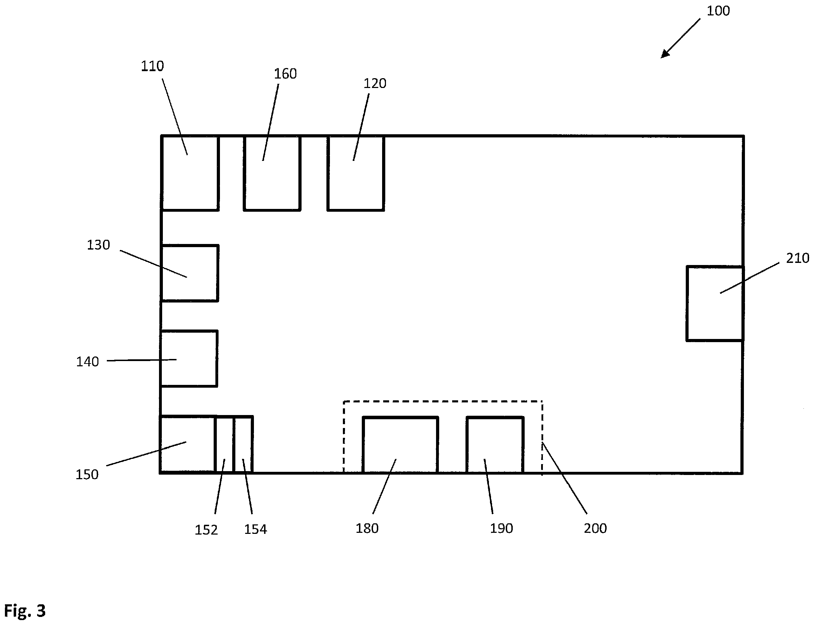

Figur 3 zeigt ein Datenendgerät 100, hier in Form eines Smartphones, das ausgebildet ist, die obigen Verfahrensschritte zur Unterstützung der Installation eines Präsenz- oder Lichtsensors für ein Beleuchtungssystem in einer Beleuchtungsumgebung auszuführen. Das Smartphone 100 weist eine Speichereinrichtung 120, eine Steuereinrichtung sowie Positionserfassungsmittel zur Erfassung eines Installationsortes und/oder einer Ausrichtung des Sensors sowie Einfügemittel bezüglich des positions- und ausrichtungsgenauen Einfügens des abgespeicherten Erfassungsbereichs des Sensors in das zumindest angenäherte digitale Abbild der Beleuchtungsumgebung. In der Praxis sind zumindest das Positionserfassungsmittel 130 und das Einfügemittel 140 über in einem Programmspeicher abgelegte Softwareroutinen abgelegt, gleiches gilt zumindest teilweise für die Steuereinrichtung 110, die durch ein auf einem Mikroprozessor ablaufenden Steuerprogramm bereitgestellt wird. Darüber hinaus umfasst das Datenendgerät 100 eine Kameraeinrichtung 150, die ausgebildet ist, 2D-Bilder der realen Beleuchtungsumgebung aufzunehmen sowie Einrichtungen 152, 154 in Form eines Gyroskopsensors und eines Beschleunigungssensors zur Ermittlung der Lage und der Ausrichtung des Endgeräts bzw. der Kamera zum Zeitpunkt der jeweiligen Aufnahmen. Insbesondere zur Durchführung der beschriebenen Bildbearbeitung weist das Endgerät 100 darüber hinaus eine Datenverarbeitungseinrichtung 160, beispielsweise in Form einer numerischen Prozesseinheit auf, die in einer anderen Ausführungsform jedoch auch durch die CPU dadurch bereitgestellt werden kann, dass ein in einem Programmspeicher abgelegtes Programm abgearbeitet wird. Darüber hinaus weist das Datenendgerät 100 zur Durchführung des erfindungsgemäßen Verfahrens je nach Ausführungsform einen Bildschirm 180 zur Darstellung von Kameraaufnahmen bzw. von Ansichten aus dem in einem Speicher abgelegten digitalen Abbild der Beleuchtungsumgebung und eine Eingabeeinrichtung 190 auf, über welche Nutzereingaben erfolgen können. In einer weiteren Ausführungsform kann auch vorgesehen sein, die Eingabeeinrichtung und die Anzeigeeinrichtung bzw. den Bildschirm funktional zusammenzufassen, beispielsweise in Form eines Touchscreens 200 zur Darstellung der beschriebenen Ansichten und zur Durchführung von Bedienereingaben. Darüber hinaus weist das Datenendgerät 100 der Figur 3 zumindest eine Datenschnittstelle 210 auf, die zweckmäßigerweise als Luftschnittstelle ausgebildet sein kann, um drahtlos einen Austausch zu externen Geräten bereitzustellen, beispielsweise zum Bereitstellen einer Verbindung zu einer Datenbank, in welcher Erfassungsraumbereiche eines oder mehrerer Sensoren abgelegt sind, unter Umständen jedoch auch zur Bereitstellung einer Datenverbindung zu dem zu installierenden Präsenz- oder Lichtsensor, wobei diese Datenverbindung beispielsweise über eine Steuereinrichtung des Beleuchtungssystems realisiert sein kann. Hierdurch kann beispielsweise die Möglichkeit geschaffen sein, Einstellungsinformation entweder an eine Steuerung des Beleuchtungssystems oder direkt an den Sensor zu übermitteln, wobei dieser eingerichtet sein kann, einen übermittelten Einstellungsparameter umzusetzen.

Die Installation eines Präsenz- oder Lichtsensors kann insbesondere dadurch vereinfacht werden, dass einem Nutzer eine Visualisierung des Erfassungsraumbereichs des jeweiligen Sensors mit Bezug auf die Beleuchtungsumgebung bereitgestellt werden kann.

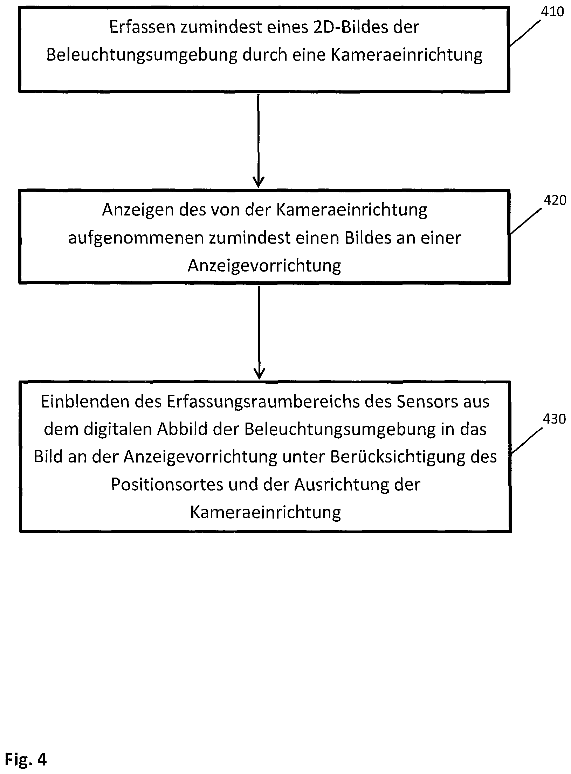

Figur 4 zeigt den Ablauf eines solchen Verfahrens, bei dem im Schritt 410 zunächst ein 2D-Bild der Beleuchtungsumgebung mittels einer Kameraeinrichtung aufgenommen und im nachfolgenden Schritt 420 an einer Anzeigeeinrichtung angezeigt wird. Nun erfolgt im Schritt 430 das Einblenden des Erfassungsbereichs des Sensors aus dem zumindest angenäherten digitalen Abbild der Beleuchtungsumgebung in das an der Anzeigeeinrichtung angezeigte Bild unter Berücksichtigung der Perspektive, d.h. des Positionsortes und der Ausrichtung der Kameraeinrichtung. Die Schritte 410, 420 und 430 können in Echtzeit erfolgen, sodass ein Nutzer durch Bewegen innerhalb der Beleuchtungsumgebung mit dem Datenendgerät unter beliebigen Perspektiven kontrollieren kann, ob ein Sensor so installiert ist, dass er die gewünschten Bereiche in der Beleuchtungsumgebung erfasst.

In einer geänderten Ausführungsform kann auch vorgesehen sein, statt der Erfassung eines Bildes der Beleuchtungsumgebung durch eine Kameraeinrichtung aufzunehmen, direkt eine Ansicht aus dem gespeicherten digitalen Abbild der Beleuchtungsumgebung auszuwählen, dieser Alternativschritt ersetzt dann in der Darstellung der Figur 4 'den Schritt 410, die anderen Schritte 420, 430 des Verfahrens sind identisch.

Um dem Nutzer eine weitere Installationshilfe zur Verfügung zu stellen, kann vorgesehen sein, dass der Nutzer am Datenendgerät, insbesondere mittels einer Eingabeeinrichtung wie eines Touchscreens einen Soll-Erfassungsraumbereich des Sensors markiert und der so vom Datenendgerät erfasste Soll-Erfassungsraumbereich im digitalen Abbild des Beleuchtungsraumes eingefügt bzw. gespeichert wird.

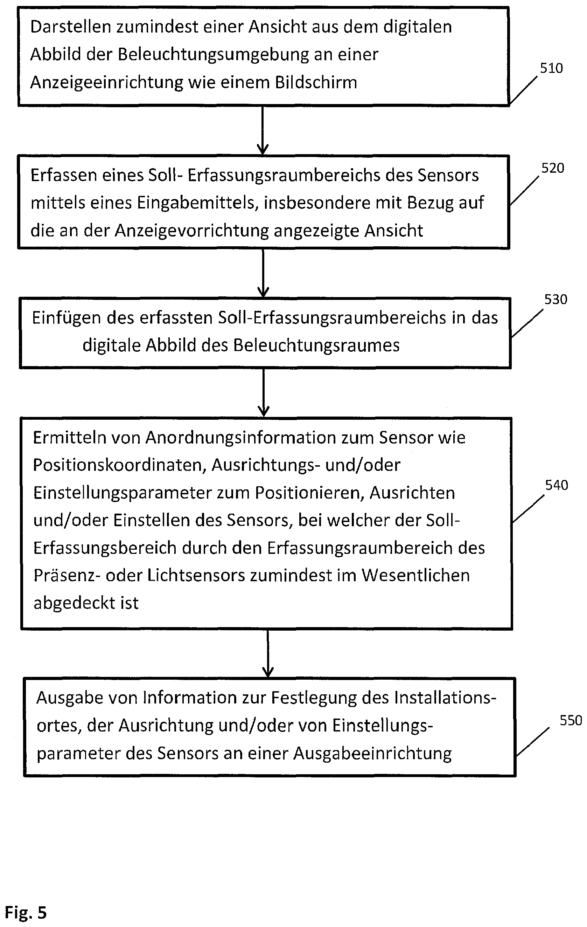

Figur 5 zeigt in einem Ablaufdiagramm einen solchen Vorgang, bei welchem kein reales Bild der Kameraeinrichtung an der Anzeigeeinrichtung angezeigt wird, sondern eine Ansicht aus dem digitalen Abbild der Beleuchtungsumgebung (Schritt 510), dem nachfolgenden Erfassen einer Bedienereingabe mittels eines Eingabemittels des Soll-Erfassungsraumbereichs des Sensors (Schritt 520) und dem Einfügen des erfassten Soll-Erfassungsbereichs in das angenäherte digitale Abbild des Beleuchtungsraums (Schritt 530). Im Schritt 540 erfolgt dann rechnergestützt eine Ermittlung von Anordnungsinformation des Sensors wie Positionskoordinaten, Ausrichtungs- und/oder Einstellungsparameter zum Positionieren, Ausrichten und/oder Einstellen des Sensors, bei welcher der Soll-Erfassungsbereich durch den Erfassungsraumbereich des Sensors zumindest im Wesentlichen abgedeckt ist. Insbesondere ist damit der Installationsort des Sensors festgelegt und diesbezügliche Information einschließlich Information zu Ausrichtungs- und/oder Einstellungsparametern des Sensors kann nachfolgend beispielsweise dem Anwender auf einer Anzeigeeinrichtung wie einem Display angezeigt werden (Schritt 550).

In einer weiteren Ausführungsform kann vorgesehen sein, als Anzeigeeinrichtung nicht das Display bzw. den Bildschirm eines Datenendgeräts zu verwenden, sondern eine Datenbrille, die mit dem Datenendgerät datentechnisch verbunden ist und von diesem die Informationen zur Darstellung der jeweiligen Ansichten an der Datenbrille erhält.

In einer besonders zweckmäßigen Ausführungsform ist das Datenendgerät ausgebildet, Anordnungsinformation des Sensors wie Positionskoordinaten, Ausrichtung und/oder Einstellungsparameter zu ermitteln, insbesondere zu berechnen, sodass diese ermittelte Information dann zum Positionieren, Ausrichtung und/oder Einstellen des Sensors zur Verfügung steht. Dabei ist das Datenendgerät ausgebildet, diese Anordnungsinformation so auszuwählen bzw. zu berechnen, dass der Soll-Erfassungsbereich durch den Erfassungsraumbereichs des Sensors zumindest im Wesentlichen abgedeckt ist. In der beschriebenen Ausführungsform des Datenendgeräts der Figur 3 ist dabei auch vorgesehen, dass entsprechend den Anordnungsinformationen zur Festlegung des Installationsortes, der Ausrichtung und/oder eines Einstellungsparameters des Sensors beispielsweise am Bildschirm 180 angezeigt und/oder über die Datenschnittstelle 210 externen Einrichtungen zugänglich gemacht wird, beispielsweise einer Steuereinrichtung des Beleuchtungssystems, oder auch direkt dem Sensor, insbesondere zur Einstellung von Einstellungsparametern und/oder zur Ausrichtung.

In der beschriebenen Ausführungsform ist das Datenendgerät 100 der Figur 3 auch ausgebildet, auf eine Datenbank bzw. einen Speicher, in welchem eine Mehrzahl von unterschiedlichen Sensoren zugeordnete Erfassungsraumbereiche gespeichert sind, zuzugreifen und rechnergestützt aus dieser Mehrzahl von Sensoren bzw. zugeordneten Erfassungsraumbereichen denjenigen Erfassungsraumbereich bzw. Sensor zu ermitteln, bei welchem der Soll-Erfassungsbereich durch den Erfassungsraumbereich des Sensors zumindest im Wesentlichen abgedeckt ist.

In einer nicht dargestellten Ausführungsform ist das erfindungsgemäße System in entsprechender Weise ausgebildet, die Installation einer Leuchte in den Beleuchtungssystemen zu unterstützen. Da dieses System bzw. das entsprechende Verfahren analog zu dem beschriebenen Verfahren bzw. dem beschriebenen System zur Unterstützung der Installation eines Sensors gestaltet bzw. aufgebaut ist, muss hierauf nicht im Einzelnen eingegangen werden.

### Bezugszeichenliste

- 1: Beleuchtungsumgebung, Raum
- 2: Wand
- 3: Fenster
- 10.1, 10.2: Leuchte
- 20: Lichtsensor
- 21: Erfassungskegel
- 30: Präsenzsensor
- 31: Erfassungskegel
- 100: Datenendgerät, Smartphone
- 110: Steuereinrichtung
- 120: Speichereinrichtung, Speicher
- 130: Positionserfassungsmittel
- 140: Einfügemittel
- 150: Kamera; Kameraeinrichtung
- 152: Positionserfassungseinrichtung/Positionserfassungsmittel der Kamera
- 154: Ausrichtungserfassungseinrichtung der Kamera
- 160: Datenverarbeitungseinrichtung
- 180: Bildschirm / Display/ Anzeigeeinrichtung
- 190: Eingabeeinrichtung, Eingabemittel
- 200: Touchscreen
- 210: Datenschnittstelle
- α, β: Erfassungswinkel

## Patentansprüche

1. Verfahren zur Unterstützung der Installation eines Sensors (20, 30) und/oder einer Leuchte (10.1, 10.2) für ein Beleuchtungssystem in einer Beleuchtungsumgebung, umfassend die Schritte:
- Bereitstellen von Information zum Bestimmen eines Erfassungsraumbereichs des Sensors (20, 30) bzw. zu einem Beleuchtungsraumbereich der Leuchte in einem Speicher (120);
- Erfassen von Beleuchtungsumgebungsinformation sowie Ermitteln eines zumindest angenäherten digitalen Abbildes der Beleuchtungsumgebung, wobei das zumindest angenäherte digitale Abbild der Beleuchtungsumgebung eine Datenmenge oder einen Datensatz umfasst, die bzw. der es erlaubt, eine dreidimensionale Darstellung der Beleuchtungsumgebung bereitzustellen, derartig, dass eine Mehrzahl von Perspektivansichten innerhalb der Beleuchtungsumgebung erzeugbar ist, umfassend: Erfassen einer Mehrzahl von in unterschiedlichen Perspektiven aufgenommenen 2D-Kamerabildern der Beleuchtungsumgebung und zugeordneten Signalen von einer, einer Kameraeinrichtung (150) zugeordneten Positions- und Ausrichtungserfassungseinrichtung (152, 154) sowie die datentechnische Verarbeitung der jeweiligen Bild- und zugeordneten Signalinformation, einschließlich des Erkennens von Gegenständen umfassend Leuchten und/oder Sensoren durch Bildverarbeitung mit Mustererkennung und ggf. Laden von weiteren Informationen zu den erkannten Gegenständen, zur Ermittlung des zumindest angenäherten digitalen Abbildes der Beleuchtungsumgebung und
Abspeichern des zumindest angenäherten digitalen Abbildes der Beleuchtungsumgebung;
- Erfassen eines Installationsortes und/oder einer Ausrichtung des Sensors (20, 30) und/oder der Leuchte (10.1, 10.2);
- positions- und/oder ausrichtungsgenaues Einfügen des Erfassungsbereichs des Sensors (20, 30) bzw. des Beleuchtungsraumbereichs der Leuchte (10.1, 10.2) in das zumindest angenäherte digitale Abbild der Beleuchtungsumgebung.

2. Verfahren nach Anspruch 1, **gekennzeichnet durch** das Erfassen zumindest eines Einstellungsparameters des Sensors (20, 30), insbesondere eines Drehwinkels und/oder eines Erfassungswinkelbereichs bzw. **durch** das Erfassen zumindest eines Einstellungsparameters der Leuchte (10.1, 10.2), insbesondere eines Ausrichtungsparameters und/oder eines Drehwinkels, wobei vorzugsweise
der Schritt des Einfügens des Erfassungsraumbereichs des Sensors (20, 30) bzw. des Beleuchtungsraumbereichs der Leuchte (10.1, 10.2) in das digitale Abbild der Beleuchtungsumgebung unter Berücksichtigung zumindest eines der Einstellungsparameter des Sensors (20, 30) bzw. der Leuchte (10.1, 10.2) erfolgt, insbesondere eines Drehwinkels und/oder eines Erfassungswinkelbereichs des Sensors bzw. eines Drehwinkels und/oder Beleuchtungswinkelbereichs der Leuchte (10.1, 10.2).

3. Verfahren nach Anspruch 1 oder 2, **dadurch gekennzeichnet, dass** ferner die Schritte umfasst sind:
- Erfassen zumindest eines (2D) Bildes der Beleuchtungsumgebung durch eine Kameraeinrichtung (150);
- Anzeigen des von der Kameraeinrichtung (150) aufgenommenen zumindest einen Bildes an einer Anzeigeeinrichtung (180);
- Einblenden des Erfassungsraumbereichs des Sensors (20, 30) bzw. des Beleuchtungsraumbereichs der Leuchte (10.1, 10.2) aus dem digitalen Abbild der Beleuchtungsumgebung in das Bild an der Anzeigeeinrichtung unter Berücksichtigung des Positionsortes und der Ausrichtung der Kameraeinrichtung (150).

4. Verfahren nach Anspruch 3, **dadurch gekennzeichnet, dass** der Schritt des Erfassens eines Installationsortes und/oder einer Ausrichtung des Sensors (20, 30) bzw. der Leuchte (10.1, 10.2) umfasst:
- Erfassen eines Soll-Erfassungsraumbereichs des Sensors (20, 30) bzw. eines Soll-Beleuchtungsraumbereichs der Leuchte mittels eines Eingabemittels (190), insbesondere mit Bezug auf das an der Anzeigeeinrichtung (180) angezeigte zumindest eine Bild;
- Einfügen des erfassten Soll-Erfassungsraumbereichs bzw. des erfassten Soll-Beleuchtungsraumbereichs in das digitale Abbild des Beleuchtungsraumes.

5. Verfahren nach einem der Ansprüche 1 bis 2,
**dadurch gekennzeichnet, dass** der Schritt des Erfassens eines Installationsortes und/oder einer Ausrichtung des Sensors (20, 30) bzw. der Leuchte (10.1, 10.2) umfasst:
- Darstellen zumindest einer Ansicht aus dem digitalen Abbild der Beleuchtungsumgebung an einer Anzeigeeinrichtung wie einem Bildschirm (180);
- Erfassen eines Soll-Erfassungsraumbereichs des Sensors (20, 30) bzw. eines Soll-Beleuchtungsraumbereichs der Leuchte mittels eines Eingabemittels (190), insbesondere mit Bezug auf die an der Anzeigeeinrichtung angezeigte Ansicht; und
- Einfügen des erfassten Soll-Erfassungsraumbereichs bzw. Soll-Beleuchtungsraumbereichs in das digitale Abbild des Beleuchtungsraumes.

6. Verfahren nach einem der Ansprüche 4 oder 5,
**dadurch gekennzeichnet, dass** der Schritt des Erfassens eines Installationsortes und/oder einer Ausrichtung des Sensors (20, 30) bzw. der Leuchte (10.1, 10.2) ferner umfasst das Ermitteln von Anordnungsinformation des Sensors (20, 30) bzw. der Leuchte (10.1, 10.2) wie Positionskoordinaten, Ausrichtungs- und/oder Einstellungsparameter zum Positionieren, Ausrichten und/oder Einstellen des Sensors (20, 30) bzw. der Leuchte (10.1, 10.2), bei welcher der Soll-Erfassungsbereich durch den Erfassungsraumbereich des Sensors bzw. der Soll-Beleuchtungsraumbereich durch den Beleuchtungsraumbereich der Leuchte (10.1, 10.2) zumindest im Wesentlichen abgedeckt ist, wobei vorzugsweise
Information zur Festlegung des Installationsortes, der Ausrichtung und/oder von Einstellungsparameter des Sensors (20, 30) bzw. der Leuchte (10.1, 10.2) an einer Ausgabeeinrichtung ausgegebenen wird.

7. Verfahren nach einem der Ansprüche 1 bis 6,
**dadurch gekennzeichnet, dass** für eine Mehrzahl von Sensoren (20, 30) bzw. Leuchten (10.1, 10.2) zugeordnete Erfassungsraumbereiche bzw. Beleuchtungsraumbereiche gespeichert werden, wobei vorzugsweise rechnergestützt aus der Mehrzahl von den Sensoren (20, 30) zugeordneten Erfassungsraumbereichen derjenige Erfassungsraumbereich bzw. Sensor ermittelt wird, bei welchem der Soll-Erfassungsbereich durch den Erfassungsraumbereich des Präsenz- oder Lichtsensors zumindest im Wesentlichen abgedeckt ist, und/oder rechnergestützt aus der Mehrzahl von den Leuchten (10.1, 10.2) zugeordneten Beleuchtungsraumbereichen derjenige Beleuchtungsraumbereich bzw. die Leuchte ermittelt wird, bei welchem der Soll-Beleuchtungsraumbereich durch den Beleuchtungsraumbereich der Leuchte (10.1, 10.2) zumindest im Wesentlichen abgedeckt ist.

8. System zur Unterstützung der Installation eines Sensors (20, 30) und/oder einer Leuchte (10.1, 10.2) für ein Beleuchtungssystem in einer Beleuchtungsumgebung, umfassend:
- den Sensor (20, 30) und/oder die Leuchte (10.1, 10.2) ;
- eine Steuerungseinrichtung (110), die ausgebildet ist zum Zugreifen auf einen Speicher (120) zum Speichern von Information zum Bestimmen eines Erfassungsraumbereichs des Sensors (20, 30) und/oder von Information zum Bestimmen eines Beleuchtungsraumbereichs der Leuchte (10.1, 10.2); und wobei die Steuereinrichtung (110) ausgebildet ist zum Erfassen von Beleuchtungsumgebungsinformation sowie zum Ermitteln und zum Abspeichern eines zumindest angenäherten digitalen Abbildes der Beleuchtungsumgebung;
- eine Kameraeinrichtung (150) sowie eine der Kameraeinrichtung zugeordnete Positions- und Ausrichtungserfassungseinrichtung, ausgebildet zum Erfassen einer Mehrzahl von in unterschiedlichen Perspektiven aufgenommenen 2D-Kamerabildern der Beleuchtungsumgebung und zugeordneten Signalen der Positions- und Ausrichtungserfassungseinrichtung (152, 154); und eine
- Datenverarbeitungseinrichtung (160), ausgebildet zur datentechnischen Verarbeitung der jeweiligen Bild- und zugeordneten Signalinformation und zum Erkennen von Gegenständen, einschließlich Leuchten und/oder Sensoren, durch Bildverarbeitung mit Mustererkennung und ggf. zum Laden von weiteren Informationen zu den erkannten Gegenständen, zur Ermittlung des zumindest angenäherten digitalen Abbildes der Beleuchtungsumgebung, wobei das zumindest angenäherte digitale Abbild der Beleuchtungsumgebung eine Datenmenge oder einen Datensatz umfasst, die bzw. der es erlaubt, eine dreidimensionale Darstellung der Beleuchtungsumgebung bereitzustellen, derartig, dass eine Mehrzahl von Perspektivansichten innerhalb der Beleuchtungsumgebung erzeugbar ist;
- ein Positionserfassungsmittel zum Erfassen eines Installationsortes und/oder einer Ausrichtung des Sensors (20, 30) und/oder der Leuchte (10.1, 10.2); und
- ein Einfügemittel zum positions- und/oder ausrichtungsgenauen Einfügen des Erfassungsbereichs des zumindest einen Sensors (20, 30) bzw. des Beleuchtungsraumbereichs des Sensors in das zumindest angenäherte digitale Abbild der Beleuchtungsumgebung.

9. System nach Anspruch 8, **dadurch gekennzeichnet, dass**
- eine mit der Steuereinrichtung (110) verbundene Eingabeeinrichtung zur manuellen Eingabe zumindest eines Einstellungsparameters des Sensors (20, 30) bzw. der Leuchte (10.1, 10.2), insbesondere eines Drehwinkels und/oder eines Erfassungswinkelbereichs bzw. eines Beleuchtungswinkelbereichs, wobei die Steuereinrichtung (110) den zumindest einen eingegebenen Einstellungsparameter erfasst; und/oder
- das Einfügemittel ausgebildet ist, den Erfassungsraumbereich des Sensors (20, 30) bzw. den Beleuchtungsraumbereich der Leuchte (10.1, 10.2) in das digitale Abbild der Beleuchtungsumgebung unter Berücksichtigung zumindest eines der Einstellungsparameter des Sensors (20, 30) bzw. der Leuchte (10.1, 10.2) einzufügen, insbesondere unter Berücksichtigung eines Drehwinkels und/oder eines Erfassungswinkelbereichs bzw. Beleuchtungswinkelbereichs.

10. System nach Anspruch 9, **dadurch gekennzeichnet, dass** ein Datenendgerät (100) umfasst ist, aufweisend die Steuereinrichtung (110), das Positionserfassungsmittel zum Erfassen eines Installationsortes und/oder einer Ausrichtung des Sensors (20, 30) bzw. der Leuchte (10.1, 10.2), das Einfügemittel, die Kameraeinrichtung sowie die der Kameraeinrichtung (150) zugeordnete Positionserfassungs- und Ausrichtungserfassungseinrichtung (152, 154), die Datenverarbeitungseinrichtung und die Eingabeeinrichtung (190) sowie eine Anzeigeeinrichtung (180), wobei vorzugsweise
das Datenendgerät (100) ausgebildet ist zur Erfassung zumindest eines (2D) Bildes der Beleuchtungsumgebung mittels der Kameraeinrichtung (150) zum Anzeigen des von der Kameraeinrichtung aufgenommenen zumindest einen Bildes an der Anzeigeeinrichtung (180), und zum Einblenden zur Visualisierung des Erfassungsbereichs des Sensors (20, 30) bzw. des Beleuchtungsraumbereichs der Leuchte (10.1, 10.2) aus dem digitalen Abbild der Beleuchtungsumgebung in das an der Anzeigeeinrichtung (180) angezeigte Bild unter Berücksichtigung des Positionsortes und der Ausrichtung der Kameraeinrichtung (150) .

11. System nach Anspruch 10, **dadurch gekennzeichnet, dass** das Datenendgerät (100) ausgebildet ist zur Erfassung eines Soll-Erfassungsbereichs des Sensors (20, 30) bzw. eines Soll-Beleuchtungsraumbereichs der Leuchte (10.1, 10.2) mittels eines von einem Anwender bedienbaren Eingabemittels (190), insbesondere an dem an der Anzeigeeinrichtung (180) angezeigten zumindest einen Bildes, und zum Einfügen des erfassten Soll-Erfassungsbereichs bzw. des Soll-Beleuchtungsraumbereichs in das zumindest angenäherte digitale Abbild des Beleuchtungsraumes.

12. System nach Anspruch 10 oder 11, **dadurch gekennzeichnet, dass** das Datenendgerät (100) ausgebildet ist zum Anzeigen zumindest einer Ansicht aus dem digitalen Abbild der Beleuchtungsumgebung an der Anzeigeeinrichtung (180) und zum Erfassen eines Soll-Erfassungsbereichs des Sensors (20, 30) bzw. eines Soll-Beleuchtungsraumbereichs der Leuchte (10.1, 10.2) mittels eines Eingabemittels, insbesondere an dem an der Anzeigeeinrichtung (180) angezeigten zumindest einen Bildes.

13. System nach einem der Ansprüche 11 bis 12, **dadurch gekennzeichnet, dass** das Datenendgerät (100) ausgebildet ist, Anordnungsinformation des Sensors (20, 30) bzw. der Leuchte (10.1, 10.2), insbesondere Positionskoordinaten, Ausrichtungsinformation und/oder Einstellungsparameter zu ermitteln zum Positionieren und/oder Ausrichten des Sensors (20, 30) bzw. der Leuchte (10.1, 10.2), bei welcher der Soll-Erfassungsbereich durch den Erfassungsraumbereich des Sensors (20, 30) bzw. der Soll-Beleuchtungsraumbereich durch den Beleuchtungsraumbereich der Leuchte (10.1, 10.2) zumindest im Wesentlichen abgedeckt ist, wobei vorzugsweise
das Datenendgerät (100) eine Ausgabeeinrichtung (210) zur Ausgabe der ermittelten Daten zur Festlegung von Anordnungsinformation des Sensors (20, 30) bzw. der Leuchte (10.1, 10.2), insbesondere Positionskoordinaten, Ausrichtungsinformation und/oder Einstellungsparameter umfasst, insbesondere eine datentechnische Schnittstelle zur Weitergabe der ermittelten Daten an eine externe Steuereinrichtung zur Steuerung des Sensors (20, 30) bzw. der Leuchte (10.1, 10.2).

14. System nach einem der Ansprüche 10 bis 13, **dadurch gekennzeichnet, dass** das Datenendgerät (100) ausgebildet ist, auf einen Speicher (120) zuzugreifen, auf welchem eine Mehrzahl von jeweils einem Sensor (20, 30) bzw. der Leuchte (10.1, 10.2) zugeordnete Erfassungsraumbereiche gespeichert sind.

15. System nach einem der Ansprüche 10 bis 13, **dadurch gekennzeichnet, dass** das Datenendgerät (100) ausgebildet ist, rechnergestützt aus der Mehrzahl von Sensoren (20, 30) zugeordnete Erfassungsraumbereiche den Erfassungsraumbereich bzw. Sensor zu ermitteln, bei welchem der Soll-Erfassungsbereich durch den Erfassungsraumbereich des Sensors zumindest im Wesentlichen abgedeckt ist, und/oder
das Datenendgerät (100) ausgebildet ist, rechnergestützt aus der Mehrzahl von Leuchten (10.1, 10.2) zugeordnete Beleuchtungsraumbereiche den Beleuchtungsraumbereich bzw. die Leuchte zu ermitteln, bei welchem ein oder der Soll-Beleuchtungsraum-bereich durch den Beleuchtungsraumbereich der Leuchte zumindest teilweise abgedeckt ist.

## Claims

1. Method for supporting the installation of a sensor (20, 30) and/or a luminaire (10.1, 10.2) for a lighting system in a lighting environment, the method comprising the steps of:
- providing information for determining a detection space area of the sensor (20, 30) or on a lighting space area of the luminaire in a memory (120);
- collecting lighting environment information and determining an at least approximated digital image of the lighting environment, wherein the at least approximated digital image of the lighting environment comprises a data amount or data set allowing the provision of a three-dimensional representation of the lighting environment in such a way that a plurality of perspective views within the lighting environment can be created, comprising: capturing a plurality of 2D camera images taken in different perspectives and assigned signals from a position and orientation detection device (152, 154) assigned to a camera device (150) as well as data processing of the respective image information and the associated signal information including the recognition of objects comprising luminaires and/or sensors through image processing with pattern recognition and if necessary loading further information on the recognized objects to determine the at least approximated digital image of the lighting environment and
storing the at least approximated digital image of the lighting environment;
- detecting an installation site and/or orientation of the sensor (20, 30) and/or the luminaire (10.1, 10.2);
- position and/or orientation-accurate insertion of the detection area of the sensor (20, 30) or the lighting space area of the luminaire (10.1, 10.2) into the at least approximated digital image of the lighting environment.

2. Method according to claim 1, **characterized by** detecting at least one setting parameter of the sensor (20, 30), in particular a rotation angle and/or a detection angle range, or detecting at least one setting parameter of the luminaire (10.1, 10.2), in particular an orientation parameter and/or a rotation angle, wherein preferably
the step of inserting the detection space area of the sensor (20, 30) or the lighting space area of the luminaire (10.1, 10.2) into the digital image of the lighting environment takes place under consideration of at least one of the setting parameters of the sensor (20, 30) or the luminaire (10.1, 10.2), in particular a rotation angle and/or a detection angle range of the sensor or a rotation angle and/or a lighting angle range of the luminaire (10.1., 10.2).

3. Method according to claim 1 or 2, **characterized by** further comprising the steps of:
- capturing at least one (2D) image of the lighting environment using a camera device (150);
- displaying the at least one image captured by the camera device (150) at a display device (180);
- fading the detection space area of the sensor (20, 30) or the lighting space area of the luminaire (10.1, 10.2) from the digital image of the lighting environment into the image of the displace device under consideration of the position location and the orientation of the camera device (150) .

4. Method according to claim 3, **characterized in that** the step of detecting an installation site and/or an orientation of the sensor (20, 30) or the luminaire (10.1, 10.2) comprises:
- determining a target detection space area of the sensor (20, 30) or a target lighting space area of the luminaire by input device (190), in particular with regard to the at least one image displayed at the display device (180);
- inserting the determined target detection space area or the detected nominal lighting space area into the digital image of the lighting space.

5. Method according to any one of claims 1 to 2,
**characterized in that** the step of determining an installation site and/or an orientation of the sensor (20, 30) or the luminaire (10.1, 10.2) comprises:
- displaying at least one view from the digital image of the lighting environment at a display device such as a screen (180);
- determining a target detection space area of the sensor (20, 30) or a target lighting space area of the luminaire using an input device (190), in particular with regard to the view displayed at the display device; and
- inserting the determined target detection space area or the target lighting space area into the digital image of the lighting space.

6. Method according to any one of claims 4 or 5,
**characterized in that** the step of determining the installation site and/or an orientation of the sensor (20, 30) or the luminaire (10.1, 10.2) further comprises collecting arrangement information of the sensor (20, 30) or the luminaire (10.1, 10.2) such a position coordinates, orientation and/or setting parameters for positioning, orienting and/or setting the sensor (20, 30) or luminaire (10.1, 10.2), wherein the target detection area is at least substantially covered by the detection space area of the sensor or the target lighting space area is at least substantially covered by the lighting space area of the luminaire (10.1, 10.2), wherein preferably
information for specifying the installation site, the orientation and/or setting parameters of the sensor (20, 30) or the luminaire (10.1, 10.2) is output at an output device.

7. Method according to any one of claims 1 to 6,
**characterized in that** detection space areas or lighting space areas assigned to a plurality of sensors (20, 30) or luminaires (10.1, 10.2) are stored, wherein, preferably with the aid of a computer, that detection space area or sensor is determined from the plurality of detection space areas assigned to the sensors (20, 30) in which the target detection space area is at least substantially covered by the detection space area of the presence or light sensor, and/or that lighting space area or luminaire is determined with the aid of a computer from the plurality of lighting space areas assigned to the luminaires (10. 1, 10.2) in which the target lighting space area is at least substantially covered by the lighting space area of the luminaire (10.1, 10.2).

8. System for supporting the installation of a sensor (20, 30) and/or a luminaire (10.1, 10.2) for a lighting system in a lighting environment, the system comprising:
- the sensor (20, 30) and/or the luminaire (10.1, 10.2);
- a sensor control device (110) designed for accessing a memory (120) for storing information for determining a detection space area of the sensor (20, 30) and/or information for determining a lighting space area of the luminaire (10.1, 10.2); and the control device (110) designed for collecting lighting environment information as well as for determining and storing an at least approximated digital image of the lighting environment;
- a camera device (150) as well as a position and orientation detection device assigned to the camera device and designed for detecting a plurality of 2D camera images of the lighting environment taken in different views and signals assigned to the position and orientation detection device (152, 154); and a
- data processing device (160) designed for data processing of the respective image information and assigned signal information and for recognizing objects including luminaires and/or sensors by image processing with pattern recognition and if necessary for loading further information on the recognized objects for determining the at least approximated digital image of the lighting environment, wherein the at least approximated digital image of the lighting environment comprises a data amount or data set allowing the provision of a three-dimensional representation of the lighting environment in such a way that a plurality of perspective views within the lighting environment can be created:
- a position detection device for detecting an installation site and/or an orientation of the sensor (20, 30) or the luminaire (10.1, 10.2); and
- an insertion device for position and/or orientation-accurate insertion of the detection area of the at least one sensor (20, 30) or the lighting space area of the sensor into the at least approximated digital image of the lighting environment.

9. System according to claim 8, **characterized in that**
- there is provided an input device connected to the control device (110) for manual input of at least one setting parameter of the sensor (20, 30) or luminaire (10.1, 10.2), in particular a rotation angle and/or a detection angle range or a lighting angle range, wherein the control device (110) detects at least the one setting parameter entered; and/or
- the insertion device is designed for inserting the detecting space area of the sensor (20, 30) or the lighting space area of the luminaire (10.1, 10.2) into the digital image of the lighting environment under consideration of at least one of the setting parameters of the sensor (20, 30) or the luminaire (10.1, 10.2), in particular under consideration of a rotation angle and/or detection angle range or lighting angle range.

10. System according to claim 9, **characterized in that** a data terminal device (100) is included which comprises the control device (110), the position detection device for detecting an installation site and/or an orientation of the sensor (20, 30) or the luminaire (10.1, 10.2), the insertion device, the camera device as well as the position and orientation detection device (152, 154) assigned to the camera device (150), the data processing device and the input device (190) as well as a display device (180), wherein preferably
the data terminal device (100) is designed for capturing at least one (2D) image of the lighting environment by means of the camera device (150) for displaying the at least one image taken by the camera device at the display device (180) and for fading from the digital image of the lighting environment into the image displayed at the display device under consideration of the position location and the orientation of the camera device (150) to visualize the detection area of the sensor (20, 30) or the lighting space area of the luminaire (10.1, 10.2).

11. System according to claim 10, **characterized in that** the data terminal device (100) is designed for determining a target detection area of the sensor (20, 30) or a target lighting space area of the luminaire (10.1, 10.2) by means of an input device (190) operable by a user, in particular on the at least one image displayed at the display device (180), and for inserting the detected target detection area or the target lighting space area into the at least approximated digital image of the lighting space.

12. System according to any one of claims 10 or 11,
**characterized in that** the data terminal device (100) is designed for displaying at least one view from the digital image of the lighting environment at the display device (180) and for determining a target detection area of the sensor (20, 30) or a target lighting space area of the luminaire (10.1, 10.2) by means of the input device, in particular on the at least one image displayed at the display device (180).

13. System according to any one of claims 11 to 12,
**characterized in that** the data terminal device (100) is designed for determining arrangement information of sensor (20, 30) or the luminaire (10.1, 10.2), in particular position coordinates, orientation information and/or setting parameters, for positioning and/or orienting the sensor (20, 30) or the luminaire (10.1, 10.2), wherein the target detection area is at least substantially covered by the detection space area of the sensor (20, 30) or the target lighting space area is at least substantially covered by the lighting space area, wherein preferably
the data terminal device (100) comprises an output device (210) for outputting the determined data for defining arrangement information of the sensor (20, 30) or the luminaire (10.1, 10.2), in particular position coordinates, orientation information and/or setting parameters, in particular a data interface for transferring the data to an external control device for controlling the sensor (20, 30) or the luminaire (10.1, 10.2) .

14. System according to any one of claims 10 to 13,
**characterized in that** the data terminal device (100) is designed for accessing a memory (120) having stored thereon a plurality of detection space areas respectively assigned to a sensor (20, 30) or the luminaire (10.1, 10.2).

15. System according to any one of claims 10 to 13,
**characterized in that in that** the data terminal device (100) is designed for determining, with the aid of a computer, from the detection space areas assigned to the plurality of sensors (20, 30), the detection space area or sensor in which the target detection area is at least substantially covered by the detection space area of the sensor, and/or
the data terminal device (100) is designed for determining, with the aid of a computer, the lighting space area or the luminaire from the lighting space areas assigned to the plurality of luminaires (10.1, 10.2), in which one or the target lighting space area is at least partially covered by the lighting space area of the luminaire.

## Revendications

1. Procédé d'assistance à l'installation d'un capteur (20, 30) et/ou d'un appareil d'éclairage luminaire (10.1, 10.2) pour un système d'éclairage dans un environnement lumineux, le procédé comprenant les étapes de:
- fournir des informations pour déterminer une zone d'espace de détection du capteur (20, 30) ou une zone d'espace d'éclairage du luminaire dans une mémoire (120);
- recueillir des informations sur l'environnement lumineux et déterminer une image numérique au moins approximative de l'environnement lumineux, où l'image numérique au moins approximative de l'environnement lumineux comprend une quantité de données ou un ensemble de données permettant de fournir une représentation tridimensionnelle de l'environnement lumineux de telle sorte qu'une pluralité de vues en perspective à l'intérieur de l'environnement lumineux puisse être créée, comprenant: la capture d'une pluralité d'images 2D prises par un dispositif de caméra dans différentes perspectives et de signaux attribués à partir d'un dispositif de détection de position et d'orientation (152, 154) attribué à un dispositif de caméra (150) ainsi que le traitement des données des informations d'image respectives et des informations de signal associées, y compris la reconnaissance d'objets comprenant des luminaires et/ou des capteurs par traitement d'image avec reconnaissance de motif et, si nécessaire, le chargement d'informations supplémentaires sur les objets reconnus afin de déterminer l'image numérique au moins approximative de l'environnement d'éclairage, et
stocker l'image numérique au moins approximative de l'environnement lumineux;
- détection d'un site d'installation et/ou d'une orientation du capteur (20, 30) et/ou du luminaire (10.1, 10.2);
- insertion exacte en position et/ou orientation de la zone de détection du capteur (20, 30) ou de la zone d'espace d'éclairage du luminaire (10.1, 10.2) dans l'image numérique au moins approximative de l'environnement lumineux.

2. Procédé selon la revendication 1, **caractérisé par** la détection d'au moins un paramètre de réglage du capteur (20, 30), en particulier un angle de rotation et/ou une plage d'angle de détection, ou par la détection d'au moins un paramètre de réglage du luminaire (10.1, 10.2), en particulier un paramètre d'orientation et/ou un angle de rotation, dans lequel de préférence
l'étape de l'insertion de la zone d'espace de détection du capteur (20, 30) ou la zone d'espace d'éclairage du luminaire (10.1, 10.2) dans l'image numérique de l'environnement lumineux s'effectue en tenant compte d'au moins un des paramètres de réglage du capteur (20, 30) ou du luminaire (10.1, 10.2), en particulier un angle de rotation et/ou une plage d'angles de détection du capteur ou un angle de rotation et/ou une plage d'angles d'éclairage du luminaire (10.1., 10.2).

3. Procédé selon la revendication 1 ou 2, **caractérisé par le fait qu'**il comprend en outre les étapes suivantes :
- capturer au moins une image (2D) de l'environnement lumineux à l'aide d'un dispositif de caméra (150);
- afficher l'au moins une image capturée par le dispositif de caméra (150) sur un dispositif d'affichage (180);
- incruster la zone d'espace de détection du capteur (20, 30) ou la zone d'espace d'éclairage du luminaire (10.1, 10.2) de l'image numérique de l'environnement lumineux dans l'image sur le dispositif d'affichage en tenant compte de la position et de l'orientation du dispositif de caméra (150) .

4. Procédé selon la revendication 3, **caractérisé en ce que** l'étape de détection d'un site d'installation et/ou d'une orientation du capteur (20, 30) ou du luminaire (10.1, 10.2) comprend:
- la détermination d'une zone d'espace de détection cible du capteur (20, 30) ou d'une zone d'espace d'éclairage cible du luminaire par un dispositif d'entrée (190), en particulier par rapport à l'au moins une image affichée sur le dispositif d'affichage (180);
- insérer la zone d'espace de détection cible déterminée ou la zone d'espace d'éclairage cible détectée dans l'image numérique de l'espace d'éclairage.

5. Procédé selon l'une quelconque des revendications 1 à 2,
**caractérisé en ce que** l'étape de détection d'un site d'installation et/ou d'une orientation du capteur (20, 30) ou du luminaire (10.1, 10.2) comprend:
- afficher au moins une vue de l'image numérique de l'environnement lumineux sur un dispositif d'affichage tel qu'un écran (180);
- détecter une zone d'espace de détection cible du capteur (20, 30) ou une zone d'espace d'éclairage cible du luminaire à l'aide d'un dispositif d'entrée (190), en particulier par rapport à la vue affichée sur le dispositif d'affichage; et
- insérer la zone d'espace de détection cible déterminée ou la zone d'espace d'éclairage cible dans l'image numérique de l'espace d'éclairage.

6. Procédé selon l'une quelconque des revendications 4 ou 5, **caractérisé en ce que** l'étape de détection du site d'installation et/ou d'une orientation du capteur (20, 30) ou du luminaire (10.1, 10.2) comprend en outre la collecte d'informations sur la disposition du capteur (20, 30) ou du luminaire (10.1, 10.2), telles que les coordonnées de position, l'orientation et la position du capteur (20, 30) ou du luminaire (10.1, 10.2). 2) telles que les coordonnées de position, les paramètres d'orientation et/ou de réglage pour positionner, orienter et/ou régler le capteur (20, 30) ou le luminaire (10.1, 10.2), où la zone d'espace de détection cible est au moins en grande partie couverte par la zone d'espace de détection du capteur ou la zone d'espace d'éclairage cible est au moins en grande partie couverte par la zone d'espace d'éclairage du luminaire (10.1, 10.2), dans lequel de préférence
les informations permettant de spécifier le site d'installation, l'orientation et/ou les paramètres de réglage du capteur (20, 30) ou du luminaire (10.1, 10.2) sont émises sur un dispositif de sortie.

7. Procédé selon l'une quelconque des revendications 1 à 6, **caractérisé en ce que** des zones d'espace de détection ou des zones d'espace d'éclairage attribuées à plusieurs capteurs (20, 30) ou luminaires (10.1, 10.2) sont stockées, où, de préférence à l'aide d'un ordinateur, cette zone d'espace de détection ou capteur est déterminée parmi la pluralité de zones d'espace de détection attribuées aux capteurs (20, 30) dans laquelle la zone de détection cible est au moins substantiellement couverte par la zone d'espace de détection du capteur de présence ou de lumière, et/ou cette zone d'espace d'éclairage ou luminaire est déterminée à l'aide d'un ordinateur parmi la pluralité de zones d'espace d'éclairage attribuées aux luminaires (10. 1, 10.2) dans laquelle la zone d'espace d'éclairage cible est au moins en grande partie couverte par la zone d'espace d'éclairage du luminaire (10.1, 10.2).

8. Système d'assistance à l'installation d'un capteur (20, 30) et/ou d'un luminaire (10.1, 10.2) pour un système d'éclairage dans un environnement lumineux, le système comprenant:
- le capteur (20, 30) et/ou le luminaire (10.1, 10.2);
- un dispositif de commande (110) conçu pour accéder à une mémoire (120) afin de stocker des informations permettant de déterminer une zone d'espace de détection du capteur (20, 30) et/ou des informations permettant de déterminer une zone d'espace d'éclairage du luminaire (10.1, 10.2); et le dispositif de commande (110) étant conçu pour collecter des informations sur l'environnement d'éclairage ainsi que pour déterminer et stocker une image numérique, au moins approximative, de l'environnement d'éclairage;
- un dispositif de caméra (150) ainsi qu'un dispositif de détection de position et d'orientation assigné au dispositif de caméra et conçu pour détecter une pluralité d'images 2D de l'environnement lumineux prises dans différentes vues et des signaux assignés au dispositif de détection de position et d'orientation (152, 154); et un
- un dispositif de traitement des données (160) conçu pour le traitement des données des informations d'image respectives et des informations de signal assignées et pour reconnaître les objets, y compris les luminaires et/ou les capteurs, par traitement d'image avec reconnaissance des motifs et, si nécessaire, pour charger des informations supplémentaires sur les objets reconnus afin de déterminer l'image numérique au moins approximative de l'environnement d'éclairage, l'image numérique au moins approximative de l'environnement d'éclairage comprenant une quantité de données ou un ensemble de données permettant de fournir une représentation tridimensionnelle de l'environnement d'éclairage de telle sorte qu'une pluralité de vues en perspective dans l'environnement d'éclairage puissent être créées :
- un dispositif de détection de position pour détecter un site d'installation et/ou une orientation du capteur (20, 30) ou du luminaire (10.1, 10.2); et
- un dispositif d'insertion pour l'insertion en position et/ou orientation correcte de la zone de détection d'au moins un capteur (20, 30) ou de la zone d'espace d'éclairage du capteur dans l'image numérique au moins approximative de l'environnement d'éclairage.

9. Système selon la revendication 8, **caractérisé en ce que**
- un dispositif d'entrée connecté au dispositif de commande (110) est prévu pour l'entrée manuelle d'au moins un paramètre de réglage du capteur (20, 30) ou du luminaire (10.1, 10.2), en particulier un angle de rotation et/ou une plage d'angles de détection ou une plage d'angles d'éclairage, le dispositif de commande (110) détectant au moins le paramètre de réglage entré; et/ou
- le dispositif d'insertion est conçu pour insérer la zone d'espace de détection du capteur (20, 30) ou la zone d'espace d'éclairage du luminaire (10.1, 10.2) dans l'image numérique de l'environnement lumineux en tenant compte d'au moins un des paramètres de réglage du capteur (20, 30) ou du luminaire (10.1, 10.2), en particulier en tenant compte d'un angle de rotation et/ou d'une plage d'angles de détection ou d'une plage d'angles d'éclairage.

10. Système selon la revendication 9, **caractérisé en ce que** le dispositif terminal de données (100) comprend le dispositif de commande (110), le dispositif de détection de position pour détecter un site d'installation et/ou une orientation du capteur (20, 30) ou du luminaire (10.1, 10.2), le dispositif d'insertion, le dispositif de caméra ainsi que le dispositif de détection de position et d'orientation (152, 154) affecté au dispositif de caméra (150), le dispositif de traitement des données et le dispositif d'entrée (190) ainsi qu'un dispositif d'affichage (180), dans lequel, de préférence
le dispositif terminal de données (100) est conçu pour capturer au moins une image (2D) de l'environnement lumineux au moyen du dispositif de caméra (150), pour afficher au moins une image prise par le dispositif de caméra sur le dispositif d'affichage (180) et pour fondre l'image numérique de l'environnement lumineux dans l'image affichée sur le dispositif d'affichage en tenant compte de la position, de l'emplacement et de l'orientation du dispositif de caméra (150) pour visualiser la zone de détection du capteur (20, 30) ou la zone d'espace d'éclairage du luminaire (10.1, 10.2).

11. Système selon la revendication 10, **caractérisé en ce que** le dispositif terminal de données (100) est conçu pour déterminer une zone de détection cible du capteur (20, 30) ou une zone d'espace d'éclairage du luminaire (10.1, 10.2) au moyen d'un dispositif d'entrée (190) utilisable par un utilisateur, en particulier sur l'au moins une image affichée sur le dispositif d'affichage (180), et pour insérer la zone de détection cible déterminée ou la zone d'espace d'éclairage cible dans l'image numérique au moins approximative de l'espace d'éclairage.

12. Système selon l'une quelconque des revendications 10 ou 11, **caractérisé en ce que** le dispositif terminal de données (100) est conçu pour afficher au moins une vue de l'image numérique de l'environnement lumineux sur le dispositif d'affichage (180) et pour déterminer une zone de détection cible du capteur (20, 30) ou une zone d'espace d'éclairage cible du luminaire (10.1, 10.2) au moyen du dispositif d'entrée, en particulier sur l'au moins une image affichée sur le dispositif d'affichage (180).

13. Système selon l'une des revendications 11 à 12,
**caractérisé en ce que** le dispositif terminal de données (100) est conçu pour déterminer les informations de disposition du capteur (20, 30) ou du luminaire (10.1, 10.2), en particulier les coordonnées de position, les informations d'orientation et/ou les paramètres de réglage, pour positionner et/ou orienter le capteur (20, 30) ou le luminaire (10.1, 10.2), dans lequel la zone de détection cible est au moins substantiellement couverte par la zone d'espace de détection du capteur (20, 30) ou la zone d'espace d'éclairage cible est au moins substantiellement couverte par la zone d'espace d'éclairage, dans lequel, de préférence
le terminal de données (100) comprend un dispositif de sortie (210) permettant de sortir les données déterminées pour définir les informations d'agencement du capteur (20, 30) ou du luminaire (10.1, 10.2), en particulier les coordonnées de position, les informations d'orientation et/ou les paramètres de réglage, en particulier une interface de données permettant de transférer les données à un dispositif de commande externe pour commander le capteur (20, 30) ou le luminaire (10.1, 10.2).

14. Système selon l'une quelconque des revendications 10 à 13, **caractérisé en ce que** le dispositif terminal de données (100) est conçu pour accéder à une mémoire (120) dans laquelle sont stockées plusieurs zones d'espaces de détection attribuées respectivement à un capteur (20, 30) ou au luminaire (10.1, 10.2).

15. Système selon l'une quelconque des revendications 10 à 13, **caractérisé en ce que** le dispositif terminal de données (100) est conçu pour déterminer, à l'aide d'un ordinateur, parmi des zones d'espace de détection attribuées à la pluralité de capteurs (20, 30), la zone d'espace de détection ou le capteur dans lequel la zone de détection cible est au moins substantiellement couverte par la zone d'espace de détection du capteur, et/ou
le dispositif terminal de données (100) est conçu pour déterminer, à l'aide d'un ordinateur, la zone d'espace d'éclairage ou le luminaire parmi des zones d'espaces d'éclairage attribuées à la pluralité de luminaires (10.1, 10.2), dans lequel une ou la zone d'espace d'éclairage cible est au moins partiellement couverte par la zone d'espace d'éclairage du luminaire.
